# EUROPEAN PATENT APPLICATION

(11) **EP 2 821 254 A1**
(43) Date of publication of application: **07.01.2015**
(21) Application number: 13755275.8
(22) Date of filing: 28.02.2013
(51) Int. Cl.: B60C 5/01, B60C 1/00, C08L 23/00, C08L 67/00, C08L 77/00, C08L 101/00

(54) **TIRE**

(30) Priority: 29.02.2012 JP 2012044592
(71) Applicant: Bridgestone Corporation, Tokyo 104-8340 (JP)
(72) Inventor: FUDEMOTO, Hiroyuki, Tokyo 104-8340 (JP); HARADA, Takashi, Tokyo 104-8340 (JP)
(74) Representative: Oxley, Robin John George
(86) International application number: PCT/JP2013/055587
(87) International publication number: WO 2013/129632

(57) **Abstract**

A tire includes a circular tire frame formed from a resin material, in which the resin material has a tear strength of 10 N/mm or greater.

## Description

### Technical Field

The present invention relates to a tire that is fitted onto a rim, and in particular relates to a tire in which at least a part of a tire case is formed from a resin material.

### Background Art

Pneumatic tires constructed from rubber, organic fiber materials, steel members, and the like have been conventionally employed in vehicles such as passenger cars.

Recently, the use of resin materials, in particular thermoplastic resins, thermoplastic elastomers, and the like, as tire materials have been investigated from the perspectives of weight reduction, ease of molding, and ease of recycling.

For example, Patent Document 1 (Japanese Patent Application Laid-Open (JP-A) No. 2003-104008) and Patent Document 2 (JP-A No. H03-143701) disclose a pneumatic tire formed from a thermoplastic polymer material.

There is also a proposal for a pneumatic tire constructed from polymer materials such as a plurality of rubbers, thermoplastic resins, or the like, wherein the rigidity is gradually decreased from a center position of a crown portion to a shoulder portion and furthermore to a maximum width position of a side wall portion, and the rigidity is also gradually increased from the maximum width position of the side wall portion to a bead portion (see, for example, Patent Document 3 below (Japanese Patent No. 4501326)).

### Related Art Publications

Patent Document 1: JP-A No. 2003-104008
Patent Document 2: JP-A No. H03-143701
Patent Document 3: Japanese Patent No. 4501326

### SUMMARY OF INVENTION

### Technical Problem

A tire using a thermoplastic polymer material is easily manufactured and lower in cost, compared to conventional tires made of rubber. However, in a case in which a tire frame, which does not have a reinforcement member such as a carcass ply or the like installed therein, is formed with a uniform thermoplastic polymer material, there is still room for improvement from the viewpoints of stress resistance, internal pressure resistance, and the like, compared to conventional tires made of rubber.

In particular, in ordinary conventional tires made of rubber, shape is maintained under application of internal pressure to the tire by employing a carcass and ply. However, in tires employing a polymer material (resin) such as described above, there are proposals for, for example, forms in which hoops of steel cord are applied in a circumferential direction of a tire without using reinforcement members such as a carcass and ply as essential constituent elements. In such tires employing polymer materials, since it is assumed that reinforcement members are not employed in side portions, there is demand for a polymer material that in itself is capable of maintaining tire shape. In particular, there is demand for the development of a tire having suitable tear strength from the viewpoints of maintaining tire shape and puncture resistance under abrasion against curbs or the like,.

In this regard, a tire is disclosed in Patent Document 3 that combines a plurality of polymer materials to give a specified rigidity. However, although Patent Document 3 describes improving the ground contact shape in a standard air pressure-filling state by forming a rigidity distribution in a portion of a tire, there is no reference in Patent Document 3 related to tear strength.

In consideration of the above circumstances, an object of the invention is to provide a tire that is formed using a resin material and has excellent shape maintaining ability and puncture resistance.

### Solution to Problem

(1) A tire includes a circular tire frame formed from a resin material, in which the resin material, the resin material has a tear strength of 10 N/mm or greater.

### Advantageous Effects of Invention

According to the invention, a tire formed using a resin material, and having excellent shape maintaining ability and puncture resistance can be provided.

### BRIEF DESCRIPTION OF DRAWINGS

Fig. 1A is a perspective view illustrating a cross-section of a part of a tire according to an embodiment of the invention.
Fig. 1B is a cross-section of a bead portion fitted onto a rim.
Fig. 2 is a cross-section along the tire rotation axis of a tire illustrating a state in which a reinforcement cord is embedded in a crown portion of a tire case, according to a first embodiment.
Fig. 3 is an explanatory diagram to explain an operation of embedding a reinforcement cord in a crown portion of a tire case using a cord heating device and rollers.
Fig. 4A is a cross-section along the tire width direction of a tire according to an embodiment of the invention.
Fig. 4B is an enlarged cross-section along the tire width direction of a bead portion, in a state in which a rim is fitted onto the tire.
Fig. 5 is a cross-section along the tire width direction illustrating the circumference of a reinforcement layer of a tire according to a second embodiment.

### DESCRIPTION OF EMBODIMENTS

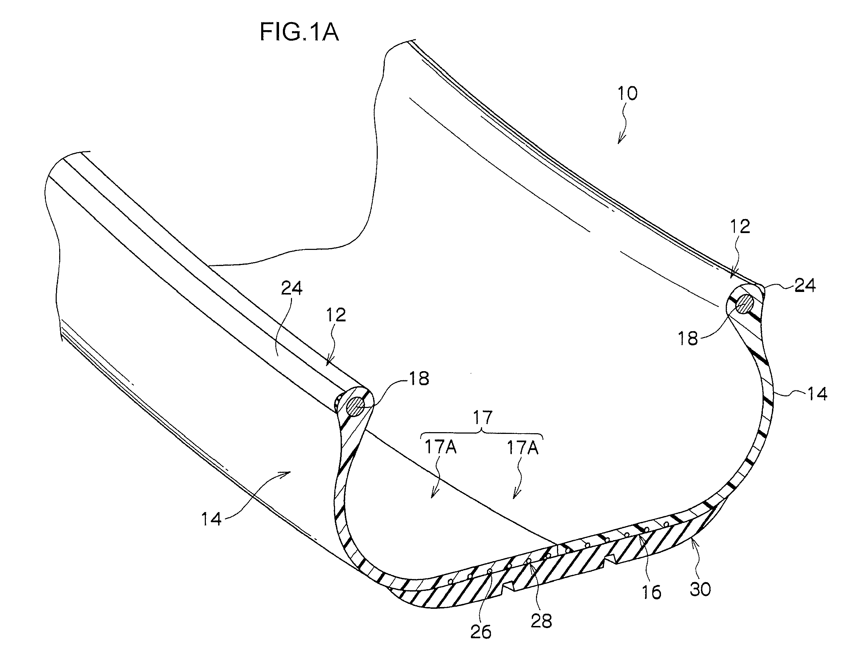

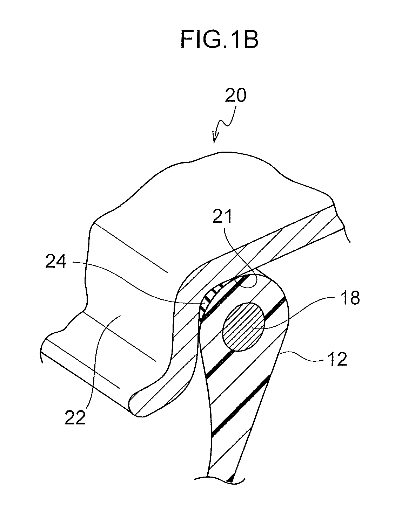

The tire of the invention includes a circular tire frame formed from a resin material, in which the resin material has a tear strength of 10 N/mm or greater. The "tear strength" refers to the tear strength as defined in JIS K7128-3 (1998). In testing, angle shaped test samples without an insection (right angled tear test samples) are employed as test samples. Samples cut in a longitudinal direction and a lateral direction, with respect to a processing direction, as illustrated in Fig. 1 of 6. Test Sample Production in JIS K7128-3, are employed as the test samples. At this time, measurement is made under a condition of a testing speed of 500 mm ± 50 mm per minute. Measurements may be performed employing a tension tester such as an autograph or the like, such as a Shimadzu Autograph AGS-J (5KN), manufactured by Shimadzu Corporation.

According to the tire of the invention, when a resin material having a tear strength of 10 N/mm or greater is used for a resin material contained in a tire frame, the shape maintaining ability and puncture resistance of a tire can be improved. Moreover, since the tire is formed with a resin material, a vulcanization process, which has been an essential process for a conventional rubber tire made of rubber, is not necessary, and for example, the tire frame can be formed by injection molding or the like. Moreover, when a resin material is used for the tire frame, the structure of a tire can be simplified compared to a conventional tire made of rubber, and as a result thereof, a tire weight reduction can be achieved. The "shape maintaining ability" of a tire can be an index of whether or not the shape of the tire is maintained when internal pressure (for example, 200 kPa) is applied to the tire. Regarding puncture resistance, when the tear strength is less than 10 N/mm, the tear strength is too low and side portions of the tire frame cannot withstand the internal pressure to bulge out in the tire width direction or the like, whereby tire shape cannot be maintained. Further, the tear strength is preferably 15 N/mm or greater. The upper limit of tear strength is not particularly limited, but is preferably 20 N/mm or less, more preferably 19 N/mm or less, and particularly preferably 18 N/mm or less, in view of balance of tensile elastic modulus and loss coefficient (tan δ).

Hereinafter, the resin material contained in the tire frame in the invention is explained, and then specific embodiments of the tire of the invention are explained with reference to the drawings.

### Resin Material

A resin material in the invention is a resin material that includes a resin, and the resin is selected such that the tear strength of the resin material is 10 N/mm or greater.

In the invention, the "resin material" contains at least a resin (a resin component), and may contain other components such as additives. When the resin material does not contain any components other than a resin component, the resin material is formed from resin alone.

In the present specification, a concept of "resin" encompasses thermoplastic resins and thermoset resins; however, it does not encompass natural rubber. Moreover, thermoplastic resins encompass thermoplastic elastomers.

"Elastomer" used here refers to a resin formed of a copolymer including a crystalline polymer which forms a hard segment having a high melting point or forms a hard segment having a high cohesion force, and an amorphous polymer which forms a soft segment having a low glass transition temperature.

### Resin

Examples of the resin include thermoplastic resins (which also include thermoplastic elastomers) and thermoset resins. The resin material may, for example, contain a thermoplastic elastomer described below alone, may contain a combination of two or more thereof, or may contain a combination of a thermoplastic elastomer and a non-elastomer thermoplastic resin. In cases in which the resin material contains a single resin alone, the tear strength of the resin is the tear strength of the resin material.

The resin material contained in the tire frame is preferably a thermoplastic resin, and is more preferably a thermoplastic elastomer. Hereinafter, the resin used in the resin material which forms the tire frame is explained, with a focus on thermoplastic resins.

### Thermoplastic Resin (including Thermoplastic Elastomer)

A thermoplastic resin (including a thermoplastic elastomer) is a polymer compound in which a material is soften and fluidized with increasing temperature and changes to a relatively hard and strong state when it is cooled.

In the present specification, among these thermoplastic resins, a polymer compound in which a material is soften and fluidized with increasing temperature and changes to a relatively hard and strong state when it is cooled, and which has a rubber-like elasticity is considered as a thermoplastic elastomer. In contrast, among these thermoplastic resins, a polymer compound in which a material is soften and fluidized with increasing temperature, and changes to a relatively hard and strong state when it is cooled, but which does not have a rubber-like elasticity, is referred to as a non-elastomer thermoplastic resin and distinguished from the thermoplastic elastomer.

Examples of the thermoplastic resin (including the thermoplastic elastomer) include a thermoplastic polyolefin-based elastomer (TPO), a thermoplastic polystyrene-based elastomer (TPS), a thermoplastic polyamide-based elastomer (TPA), a thermoplastic polyurethane-based elastomer (TPU), a thermoplastic polyester-based elastomer (TPC), and a dynamic crosslinking-type thermoplastic elastomer (TPV), as well as a non-elastomer thermoplastic polyolefin-based resin, a non-elastomer thermoplastic polystyrene-based resin, a non-elastomer thermoplastic polyamide-based resin, and a non-elastomer thermoplastic polyester-based resin. The thermoplastic resin contained in the resin material is preferably at least one selected from the thermoplastic polyester-based elastomer, the thermoplastic polyamide-based elastomer, the thermoplastic polyolefin-based elastomer, and the thermoplastic polyurethane-based elastomers.

### Thermoplastic Polyester-based Elastomer

Examples of the thermoplastic polyester-based elastomer include a material in which at least a polyester is crystalline and forms a hard segment having a high melting point and another polymer (for example, a polyester, a polyether, or the like) is amorphous and forms a soft segment having a low glass transition temperature.

The thermoplastic polyester-based elastomer is also referred to as "TPC"

### (ThermoPlastic polyester elastomer).

An aromatic polyester may be employed as the polyester that forms the hard segment. The aromatic polyester may be formed from, for example, an aromatic dicarboxylic acid or an ester-forming derivative thereof, and an aliphatic diol. The aromatic polyester is preferably polybutylene terephthalate derived from terephthalic acid and/or dimethyl terephthalate, and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol having a molecular weight of 300 or less, for example: an aliphatic diol such as ethylene glycol, trimethylene glycol, pentamethylene glycol, hexamethylene glycol, neopentyl glycol, or decamethylene glycol; an alicyclic diol such as 1,4-cyclohexane dimethanol or tricyclodecane dimethylol; an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl. The aromatic polyester may be a copolymer polyester that employs two or more of the above dicarboxylic acid components and diol components in combination. A polyfunctional carboxylic acid component having three or more functional groups, a polyfunctional oxyacid component, or a polyfunctional hydroxy component can be copolymerized in a range of 5% by mol or less.

Examples of the polyester which forms a hard segment include polyethylene terephthalate, polybutylene terephthalate, polymethylene terephthalate, polyethylene naphthalate, and polybutylene naphthalate, and polybutylene terephthalate is preferable.

Examples of a polymer which forms a soft segment include an aliphatic polyester and an aliphatic polyether.

Example of the aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide addition polymer of poly(propylene oxide)glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Of these aliphatic polyethers and aliphatic polyesters, poly(tetramethylene oxide)glycol, ethylene oxide adduct of poly(propylene oxide)glycol, poly(ε-caprolactone), polybutylene adipate, polyethylene adipate, or the like is preferable from the viewpoint of the elasticity characteristics of a polyester block copolymer to be obtained.

Moreover, from the viewpoints of toughness and flexibility at low temperature, the number average molecular weight of the polymer which forms a soft segment is preferably from 300 to 6000. Moreover, from the viewpoint of formability, the mass ratio (x:y) of the hard segment (x) to the soft segment (y) is preferably from 99:1 to 20:80, and still more preferably from 98:2 to 30:70.

Examples of the combination of the hard segment and the soft segment may include respective combinations of the hard segment and the soft segment described above. Of these, a combination in which the hard segment is polybutylene terephthalate and the soft segment is an aliphatic polyether is preferable, and a combination in which the hard segment is polybutylene terephthalate and the soft segment is poly(ethylene oxide)glycol is still more preferable.

As the thermoplastic polyester-based elastomer, for example, commercial products of the "HYTREL" series (for example, 3046, 5557, 6347, 4047, 4767, 7247, and the like), manufactured by Du Pont-Toray Co., Ltd., and from the "PELPRENE" series (P30B, P40B, P40H, P55B, P70B, P150B, P280B, P450B, P150M, S1001, S2001, S5001, S6001, S9001, and the like), manufactured by Toyobo Co., Ltd. can be employed.

### Thermoplastic Polyamide-based Elastomer

In the invention, "thermoplastic polyamide-based elastomer" refers to a thermoplastic resin material that is formed of a copolymer having a crystalline polymer which forms a hard segment having a high melting point, and an amorphous polymer which forms a soft segment having a low glass transition temperature, in which the polymer which forms the hard segment has an amide bond (-CONH-) in a main chain thereof.

The thermoplastic polyamide-based elastomer is also simply referred to as "TPA"

### (ThermoPlastic Amid elastomer).

Examples of the thermoplastic polyamide-based elastomer include a material in which at least a polyamide is crystalline and forms a hard segment having a high melting point and another polymer (for example, a polyester, a polyether, or the like) is amorphous and forms a soft segment having a low glass transition temperature. A chain extender such as a dicarboxylic acid may also be used in the thermoplastic polyamide-based elastomer, in addition to the hard segment and the soft segment. Examples of a polyamide that forms the hard segment include a polyamide formed from a monomer represented by the following Formula (1) or Formula (2).

Formula (1) **H₂N-R¹-COOH**

In Formula (1), R¹ represents a molecular chain of a hydrocarbon having from 2 to 20 carbon atoms, or a alkylene group having from 2 to 20 carbon atoms.

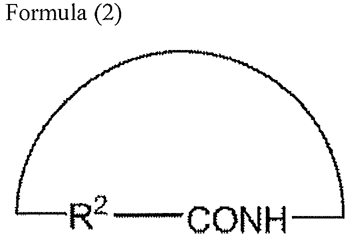

In Formula (2), R² represents a molecular chain of a hydrocarbon having from 3 to 20 carbon atoms, or an alkylene group having from 3 to 20 carbon atoms.

In Formula (1), R¹ is preferably a molecular chain of a hydrocarbon having from 3 to 18 carbon atoms or an alkylene group having from 3 to 18 carbon atoms, still more preferably a molecular chain of a hydrocarbon having from 4 to 15 carbon atoms or an alkylene group having from 4 to 15 carbon atoms, and particularly preferably a molecular chain of a hydrocarbon having from 10 to 15 carbon atoms or an alkylene group having from 10 to 15 carbon atoms. In Formula (2), R² is preferably a molecular chain of a hydrocarbon having from 3 to 18 carbon atoms or an alkylene group having from 3 to 18 carbon atoms, is still more preferably a molecular chain of a hydrocarbon having from 4 to 15 carbon atoms or an alkylene group having from 4 to 15 carbon atoms, and is particularly preferably a molecular chain of a hydrocarbon having from 10 to 15 carbon atoms or an alkylene group having from 10 to 15 carbon atoms.

Examples of the monomer represented by Formula (1) or Formula (2) above include an ω-aminocarboxylic acid and a lactam. Examples of the polyamide that forms the hard segment include a condensation polymer of the ω-aminocarboxylic acid and lactam and a condensation copolymer of a diamine and a dicarboxylic acid.

Examples of the ω-aminocarboxylic acid may include an aliphatic ω-aminocarboxylic acid having from 5 to 20 carbon atoms such as 6-aminocaproic acid, 7-aminoheptanoic acid, 8-aminooctanoic acid, 10-aminocapric acid, 11-aminoundecanoic acid, or 12-aminododecanoic acid. Examples the lactam may include an aliphatic lactam having from 5 to 20 carbon atoms such as lauryl lactam, ε-caprolactam, undecane lactam, ω-enantholactam, or 2-pyrrolidone.

Examples of the diamine may include a diamine compound such as an aliphatic diamine having from 2 to 20 carbon atoms such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, 3-methylpentamethylene diamine, or metaxylene diamine. The dicarboxylic acid may be represented by HOOC-(R³)m-COOH (wherein, R³: a molecular chain of a hydrocarbon having from 3 to 20 carbon atoms, m: 0 or 1); and examples thereof may include an aliphatic dicarboxylic acid having from 2 to 20 carbon atoms such as oxalic acid, succinic acid, glutaric acid, adipic acid, pimelic acid, suberic acid, azelaic acid, sebacic acid, or dodecanedioic acid.

As the polyamide that forms the hard segment, a polyamide obtained by ring-opening polycondensation of lauryl lactam, ε-caprolactam or undecane lactam can be preferably employed.

Examples of the polymer that forms the soft segment include a polyester and a polyether, for example. polyethylene glycol, polypropylene glycol, polytetramethylene ether glycol, and ABA-type triblock polyether. These may be employed singly, or in a combination of two or more thereof. Moreover, a polyether diamine or the like obtained by a reaction of ammonia or the like with a terminal end of a polyether can be employed.

Here, "ABA-type triblock polyether" means a polyether represented by the following Formula (3).

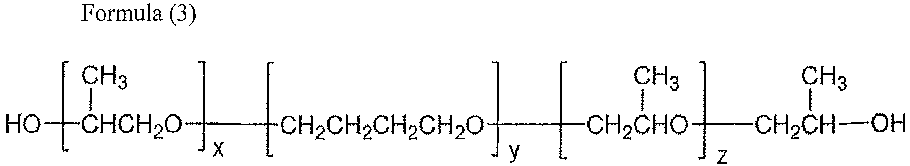

In Formula (3), x and z each represent integers of from 1 to 20. y represents an integer of from 4 to 50.

As the respective values of x and z in Formula (3), an integer of from 1 to 18 is preferable, an integer of from 1 to 16 is still more preferable, an integer of from 1 to 14 is particularly preferable, and an integer of from 1 to 12 is most preferable. As y in Formula (3), an integer of, respectively, from 5 to 45 is preferable, an integer of from 6 to 40 is more preferable, an integer of from 7 to 35 is particularly preferable, and an integer of from 8 to 30 is most preferable.

Examples of a combination of the hard segment and the soft segment may include Respective combinations of the hard segment and the soft segment described above. Among these, a combination of a ring-opening condensation polymer of lauryl lactam/polyethylene glycol, a combination of a ring-opening condensation polymer of lauryl lactam/polypropylene glycol, a combination of a ring-opening condensation polymer of lauryl lactam/polytetramethylene ether glycol, and a combination of a ring-opening condensation polymer of lauryl lactam/an ABA-type triblock polyether are preferable. The combination of a ring-opening condensation polymer of lauryl lactam/an ABA-type triblock polyether is particularly preferable.

From the viewpoint of melting-formability, the number average molecular weight of the polymer (polyamide) which forms the hard segment is preferably from 300 to 30000. From the viewpoints of toughness and low temperature flexibility, the number average molecular weight of the polymer which forms the soft segment is preferably from 200 to 20000. From the viewpoint of formability, the mass ratio (x:y) of the hard segment (x) to the soft segment (y) is preferably from 50:50 to 90:10, and is more preferably from 50:50 to 80:20.

The thermoplastic polyamide-based elastomer can be synthesized by copolymerizing the polymer which forms the hard segment and the polymer which forms the soft segment, by a known method.

As the thermoplastic polyamide-based elastomer, for example, commercial products of the "UBESTA XPA" series (for example, XPA9063X1, XPA9055X1, XPA9048X2, XPA9048X1, XPA9040X1, XPA9040X2, XPA9044, and the like), manufactured by Ube Industries, Ltd., and "VESTAMID" series (for example, E40-S3, E47-S1, E47-S3, E55-S1, E55-S3, E55-S4, E55-K1W2, EX9200, and E50-R2), manufactured by Daicel-Evonik Ltd and the like can be used.

### Thermoplastic Polyolefin-based Elastomer

Examples of the "thermoplastic polyolefin-based elastomer" include a material in which at least a polyolefin which is crystalline and forms a hard segment having a high melting point and another polymer (for example the polyolefin or another polyolefin) which is amorphous and forms a soft segment having a low glass transition temperature. Examples of the polyolefin which forms a hard segment include, for example, polyethylene, polypropylene, isotactic polypropylene, and polybutene.

Thermoplastic polyolefin-based elastomers are also imply referred to as "TPO"

### (ThermoPlastic Olefin elastomers).

The thermoplastic polyolefin-based elastomer is not particularly limited, and examples thereof include a copolymer in which a crystalline polyolefin forms a hard segment having a high melting point and an amorphous polymer forms a soft segment having a low glass transition temperature.

Examples of the thermoplastic polyolefin-based elastomer include an olefin-α-olefin random copolymer, and an olefin block copolymer, for example, a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, a 1-butene-4-methyl-pentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

As the thermoplastic polyolefin-based elastomer, a propylene block copolymer, an ethylene-propylene copolymer, a propylene-1-hexene copolymer, a propylene-4-methyl-1pentene copolymer, a propylene-1-butene copolymer, an ethylene-1-hexene copolymer, an ethylene-4-methyl-pentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer are preferable, and an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer, and an ethylene-butyl acrylate copolymer are still more preferable.

Moreover, two or more polyolefin resins, such as ethylene and propylene, may be used in combination. Moreover, a content ratio of the polyolefin in the thermoplastic polyolefin-based elastomer is preferably from 50% by mass to 100% by mass.

The number average molecular weight of the thermoplastic polyolefin-based elastomer is preferably from 5,000 to 10,000,000. When the number average molecular weight of the thermoplastic polyolefin-based elastomer is from 5,000 to 10,000,000, the resin material has sufficient mechanical physical properties and excellent workability. From similar viewpoints, the number average molecular weight is more preferably from 7,000 to 1,000,000, and is particularly preferably from 10,000 to 1,000,000. Accordingly, the mechanical physical properties and workability of the resin material can be further improved. From the viewpoint of toughness and low temperature flexibility, the number average molecular weight of the polymer which forms the soft segment is preferably from 200 to 6000. From the viewpoint of formability, the mass ratio (x:y) of the hard segment (x) to the soft segment (y) is preferably from 50:50 to 95:5, and is still more preferably from 50:50 to 90:10.

The thermoplastic polyolefin-based elastomer can be synthesized by copolymerizing a polymer which forms a hard segment and a polymer which forms a soft segment by a known method.

Moreover, a product obtained by acid-modifying a thermoplastic elastomer may be used as the thermoplastic polyolefin elastomer.

The "product by acid-modifying a thermoplastic polyolefin elastomer" refers to a product obtained by bonding an unsaturated compound having an acid group such as a carboxylic acid group, a sulfuric acid group, or a phosphoric acid group, with a thermoplastic polyolefin elastomer. For example, in a case in which an unsaturated carboxylic acid (generally, maleic acid anhydride) is employed as the unsaturated compound having an acid group, an unsaturated bond site of the unsaturated carboxylic acid is bonded with (for example, a graft polymerization) a thermoplastic olefin-based elastomer.

From the viewpoint of suppressing degradation of the thermoplastic polyolefin elastomer, the compound having an acid group is preferably a compound having a carboxylic acid group that is a weak acid group, and examples thereof include acrylic acid, methacrylic acid, itaconic acid, crotonic acid, isocrotonic acid, and maleic acid.

As the thermoplastic polyolefin-based elastomer, for example, commercial products of "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680), manufactured by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), "Elvaloy AC" series (for example, 1125AC, 1209AC, 1218AC, 1609AC, 1820AC, 1913AC, 2112AC, 2116AC, 2615AC, 2715AC, 3117AC, 3427AC, and 3717AC), manufactured by Du Pont-Mitsui Polychemicals Co., Ltd., "ACRYFT" series and "EVATATE" series, manufactured by Sumitomo Chemical Co., Ltd., "ULTRA SEN" series, manufactured by Tosoh Corporation, and the like can be used.

Moreover, as the thermoplastic polyolefin-based elastomer, for example, commercial products of "PRIME TPO" series (examples, E-2900H, F-3900H, E-2900, F-3900, J-5900, E-2910, F-3910, J-5710, E-2710, F-3710, J-5910, E-2740, F-3740, R110MP, R110E, T310E, M142E, and the like), manufactured by Prime Polymer Co., Ltd., and the like can also be used.

### Thermoplastic Polyurethane-based Elastomer

Examples of the thermoplastic polyurethane-based elastomer include a material in which at least a polyurethane forms a hard segment in which a pseudo-crosslink is formed by physical aggregation and another polymer is amorphous and forms a soft segment having a low glass transition temperature.

The thermoplastic polyurethane-based elastomer is also referred to simply as "TPU"

### (ThermoPlastic Urethan elastomer).

Specifically, the thermoplastic polyurethane-based elastomer can be represented by a copolymer including a soft segment including a unit structure represented by the following Structural Unit (U-1) and a hard segment including a unit structure represented by the following Structural Unit (U-2), for example.

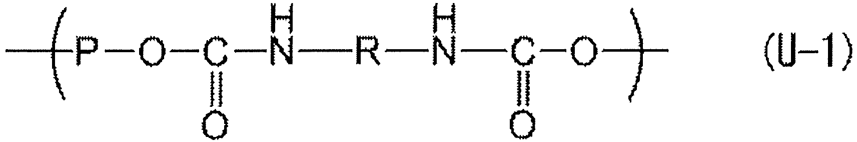

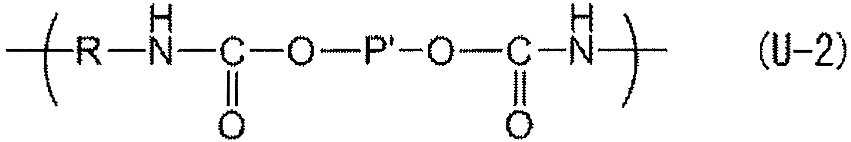

In the Structural Unit (U-1) and the Structural Unit (U-2), P represents a long-chain aliphatic polyether, or a long-chain aliphatic polyester. R represents an aliphatic hydrocarbon, an alicyclic hydrocarbon, or an aromatic hydrocarbon. P' represents a short-chain aliphatic hydrocarbon, an alicyclic hydrocarbon, or an aromatic hydrocarbon.

In the Structural Unit (U-1), as the long-chain aliphatic polyether or the long-chain aliphatic polyester represented by P, for example, one having a molecular weight of from 500 to 5000 can be employed. P is derived from a diol compound including a long-chain aliphatic polyether or a long-chain aliphatic polyester, represented by P. Examples of the diol compound include polyethylene glycol, polypropylene glycol, polytetramethylene ether glycol, poly(butylene adipate)diol, poly-ε-caprolactone diol, poly(hexamethylene carbonate)diol, and the ABA-type triblock polyether (polyether represented by Formula (3) above), each of which has a molecular weight within the range described above.

These compounds may be employed singly, or two or more thereof may be used in combination.

In the Structural Unit (U-1) and the Structural Unit (U-2), R is derived from a diisocyanate compound including an aliphatic hydrocarbon, an alicyclic hydrocarbon, or an aromatic hydrocarbon, represented by R. Examples of the aliphatic diisocyanate compound including an aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound including an alicyclic hydrocarbon represented by R include 1,4-cyclohexane diisocyanate and 4,4-cyclohexane diisocyanate. Moreover, examples of the aromatic diisocyanate compound including the aromatic hydrocarbon represented by the R include 4,4'-diphenylmethane diisocyanate and tolylene diisocyanate.

These compounds may be employed singly, or two or more thereof may be used in combination.

In the Structural Unit (U-2), as a short-chain aliphatic hydrocarbon, alicyclic hydrocarbon, or aromatic hydrocarbon, represented by P', for example, one having a molecular weight of less than 500 may be employed. P' is derived from a diol compound including a short-chain aliphatic hydrocarbon, an alicyclic hydrocarbon, or an aromatic hydrocarbon, represented by P'. Examples of the aliphatic diol compound including a short-chain aliphatic hydrocarbon, represented by P' include a glycol, and a polyalkylene glycol, and examples thereof include ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of the alicyclic diol compound including an alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Examples of the aromatic diol compound including an aromatic hydrocarbon represented by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1 -di(4-hydroxyphenyl)cyclohexane, 1,2-bis(4-hydroxyphenoxy)ethane, 1,4-dihydroxynaphthalene, and 2,6-dihydroxynaphthalene.

These compounds may be employed singly, or two or more thereof can be used in combination.

From the viewpoint of melting -formability, the number average molecular weight of the polymer (polyurethane) which forms the hard segment is preferably from 300 to 1500. Moreover, from the viewpoints of flexibility and thermal stability of the thermoplastic polyurethane-based elastomer, the number average molecular weight of the polymer which forms the soft segment is preferably from 500 to 20000, more preferably from 500 to 5000, and particularly preferably from 500 to 3000. Moreover, from the viewpoint of formability, the mass ratio (x:y) of the hard segment (x) to the soft segment (y) is preferably from 15:85 to 90:10, and more preferably from 30:70 to 90:10.

The thermoplastic polyurethane-based elastomer can be synthesized by copolymerizing a polymer which forms a hard segment and a polymer which forms a soft segment, by a known method. The thermoplastic polyurethane described in JP-A H05-331256, for example, may be employed as the thermoplastic polyurethane-based elastomer.

Specifically, the thermoplastic polyurethane-based elastomer is preferably a combination of a hard segment formed from an aromatic diol and an aromatic diisocyanate and a soft segment formed from a polycarbonate ester, a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, and an MDI + hydroquinone/polyhexamethylene carbonate copolymer are preferable, and a TDI/polyester-based polyol copolymer, a TDI/polyether-based polyol copolymer, an MDI/polyester polyol copolymer, an MDI/polyether-based polyol copolymer, and an MDI+ hydroquinone /polyhexamethylene carbonate copolymer are more preferable.

Moreover, as the thermoplastic polyurethane-based elastomer, for example, commercial products of "ELASTOLLAN" series (for example, ET680, ET880, ET858D, ET690, ET890, and the like), manufactured by BASF SE, "KURAMIRON U" series (for example, 2000 series, 3000 series, 8000 series, and 9000 series), manufactured by Kuraray Co., Ltd., and "MIRACTRAN" series (for example, XN-2001, XN-2004, P390RSUP, P480RSUI, P26MRNAT, E490, E590, and P890), manufactured by Nippon Miractran Co., Ltd can be employed.

### Thermoplastic Polystyrene-based Elastomer

Examples of the thermoplastic polystyrene-based elastomer include a material in which at least polystyrene forms a hard segment and another polymer (for example, polybutadiene, polyisoprene, polyethylene, hydrogenated polybutadiene, hydrogenated polyisoprene, or the like) forms a soft segment having a low glass transition temperature. A synthetic rubber such as a vulcanized SBR resin or the like may be used as the thermoplastic polystyrene-based elastomer.

Thermoplastic polystyrene-based elastomer is also referred to as "TPS"

### (ThermoPlastic Styrene elastomer).

Both an acid-modified thermoplastic polystyrene-based elastomer modified with an acid group, and an unmodified thermoplastic polystyrene-based elastomer may be employed as the thermoplastic polystyrene-based elastomer.

As the polystyrene which forms the hard segment, for example, one obtained by a known radical polymerization method or ionic polymerization method can be suitably used, and examples thereof include a polystyrene having anionic living polymerization. Examples of the polymer which forms the soft segment include polybutadiene, polyisoprene, and poly(2,3-dimethyl-butadiene). The acid-modified thermoplastic polystyrene-based elastomer can be obtained by acid-modifying an unmodified thermoplastic polystyrene-based elastomer, as described below.

Examples of a combination of the hard segment and the soft segment may include respective combinations of the hard segment and the soft segment described above. Of these, a combination of polystyrene/polybutadiene and a combination of polystyrene/polyisoprene are preferable. Moreover, to suppress unintended crosslinking reactions of the thermoplastic elastomer, the soft segment is preferably hydrogenated.

The number average molecular weight of the polymer (polystyrene) which forms the hard segment is preferably from 5000 to 500000, and preferably from 10000 to 200000. Moreover, the number average molecular weight of the polymer which forms the soft segment is preferably from 5000 to 1000000, more preferably from 10000 to 800000, and particularly preferably from 30000 to 500000. Moreover, from the viewpoint of formability, the volume ratio (x:y) of the hard segment (x) to the soft segment (y) is preferably from 5:95 to 80:20, and still more preferably from 10:90 to 70:30.

The thermoplastic polystyrene-based elastomer can be synthesized by copolymerizing the polymer which forms a hard segment and the polymer which forms a soft segment by a known method.

Examples of the thermoplastic polystyrene-based elastomer include styrene-butadiene-based copolymers [SBS (polystyrene-poly(butylene)block-polystyrene) and SEBS (polystyrene-poly(ethylene/butylene)block-polystyrene)], styrene-isoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene), and SEB (polystyrene (ethylene/butylene)block)], and SEBS is particularly preferable.

As the unmodified thermoplastic polystyrene-based elastomer, for example, commercial products of "TUFTEC" series (for example, H1031, H1041, H1043, H1051, H1052, H1053, H1062, H1082, H1141, H1221, and H1272) manufactured by Asahi Kasei Corporation, SEBS ("HYBRAR" 5127, 5125, and the like) and SEPS ("SEPTON" 2002, 2063, S2004, S2006, and the like), manufactured by Kuraray Co., Ltd can be used.

### Acid-modified Thermoplastic Polystyrene-based Elastomer

"Acid-modified thermoplastic polystyrene-based elastomer" refers to a thermoplastic polystyrene-based elastomer that is acid-modified by bonding an unsaturated compound having an acid group such as a carboxylic acid group, a sulfuric acid group, a phosphoric acid group, or the like with an unmodified thermoplastic polystyrene-based elastomer. The acid-modified thermoplastic polystyrene-based elastomer can be obtained by, for example, bonding an unsaturated bond site of an unsaturated carboxylic acid or an unsaturated carboxylic acid anhydride (for example, graft polymerization) with a thermoplastic polystyrene-based elastomer.

From the viewpoint of suppressing degradation of the thermoplastic polyamide-based elastomer, the (unsaturated) compound having an acid group is preferably a compound having a carboxylic acid group that is a weak acid group, and examples thereof include acrylic acid, methacrylic acid, itaconic acid, crotonic acid, isocrotonic acid, and maleic acid.

Examples of the acid-modified thermoplastic polystyrene-based elastomer include TUFTEC such as M1943, M1911, and M1913, manufactured by Asahi Kasei Corporation, and FG19181G manufactured by Kraton Inc.

The acid value of the acid-modified thermoplastic polystyrene-based elastomer is preferably more than 0 mg (CH₃ONa)/g and 20 mg (CH₃ONa)/g or less, more preferably more than 0 mg (CH₃ONa)/g and 17 mg (CH₃ONa)/g or less, and particularly preferably more than 0 mg (CH₃ONa)/g and 15 mg (CH₃ONa)/g or less.

The thermoplastic elastomer can be synthesized by copolymerizing the polymer which forms a hard segment and the polymer which forms a soft segment by a known method.

Hereinafter, various non-elastomer thermoplastic resins are explained.

### Non-elastomer Thermoplastic Polyolefin-based Resin

The non-elastomer polyolefin-based resin is a polyolefin-based resin having a higher elastic modulus than the thermoplastic polyolefin-based elastomers described above.

Examples of the non-elastomer thermoplastic polyolefin-based resin include a homopolymer, a random copolymer, and a block copolymer, of an α-olefin such as propylene or ethylene, and of a cyclic olefin such as a cycloolefin. Specific examples thereof include a thermoplastic polyethylene-based resin, a thermoplastic polypropylene-based resin, and a thermoplastic polybutadiene-based resin, and a thermoplastic polypropylene-based resin is particularly preferable from the viewpoints of heat resistance and workability.

Specific examples of the non-elastomer thermoplastic polypropylene-based resin include a propylene homopolymer, a propylene-α-olefin random copolymer, and a propylene-α-olefin block copolymer. Examples of such the α-olefin include an α-olefin having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

The thermoplastic polyolefin-based resin may be a chlorinated polyolefin-based resin in which a part or all of the hydrogen atoms in the molecule are substituted with a chlorine atom. Examples of the chlorinated polyolefin-based resin include a chlorinated polyethylene-based resin.

### Non-elastomer Thermoplastic Polystyrene-based Resin

The non-elastomer thermoplastic polystyrene-based resin is a thermoplastic polystyrene-based resin having a higher elastic modulus than the thermoplastic polystyrene-based elastomer described above.

As the thermoplastic polystyrene-based resin, for example, one obtained by a known radical polymerization method or ionic polymerization method is suitably used, and examples thereof include polystyrene having an anionic living polymerization. Moreover, examples of the thermoplastic polystyrene-based resin may include a polymer containing a styrene molecular skeleton and a copolymer of styrene and acrylonitrile.

Of these, an acrylonitrile/butadiene/styrene copolymer and a hydrogenated product thereof, a blend of an acrylonitrile/styrene copolymer and polybutadiene and a hydrogenated product thereof are preferable. Specific examples of the thermoplastic polystyrene-based resin include a polystyrene (so-called a PS resin), an acrylonitrile/styrene resin (so-called an AS resin), an acrylic-styrene-acrylonitrile resin (so-called an ASA resin), an acrylonitrile/butadiene/styrene resin (so-called anABS resin (including a blended-form and a copolymer-form)), a hydrogenated product of an ABS resin (so-called an AES resin), and an acrylonitrile-chlorinated polyethylene-styrene copolymer (so-called an ACS resin).

As stated above, the AS resin is an acrylonitrile/styrene resin, and is a copolymer having styrene and acrylonitrile as the main components. However, the AS resin may be further copolymerized with an aromatic vinyl compound such as α-methylstyrene, vinyltoluene, or divinylbenzene; a cyanated vinyl compound such as dimethacrylonitrile; an alkylester of (meth)acrylic acid such as methyl methacrylate, ethyl methacrylate, n-butyl methacrylate, methyl acrylate, ethyl acrylate, n-butyl acrylate, or stearyl acrylate; a maleimide-based monomer such as maleimide, N-methylmaleimide, N-ethylmaleimide, N-phenylmaleimide, or N-cyclohexylmaleimide; a diene compound; a dialkylester of maleic acid; an allyl alkyl ether; an unsaturated amino compound, a vinyl alkyl ether, or the like.

Moreover, as the AS resin, one obtained by further graft-polymerizing or copolymerizing with unsaturated monocarboxylic acids, unsaturated dicarboxylic acids, an unsaturated fatty acid anhydride, or a vinyl-based monomer having an epoxy group is preferable, and one obtained by further graft-polymerizing or copolymerizing with an unsaturated fatty acid anhydride or a vinyl-based monomer having an epoxy group is more preferable.

The vinyl-based monomer having an epoxy group is a compound having both a radically polymerizable vinyl group and an epoxy group in a molecule thereof. Specific examples thereof include glycidyl esters of an unsaturated organic acid such as glycidyl acrylate, glycidyl methacrylate, glycidyl ethacrylate, or glycidyl itaconate; glycidyl ethers such as allyl glycidyl ether; and derivatives thereof such as 2-methyl glycidyl methacrylate. Of these, glycidyl acrylate, and glycidyl methacrylate can be preferably employed. Moreover, these compounds can be employed singly, or two or more thereof can be used in combination.

Moreover, unsaturated fatty acid anhydrides are compounds having both a radically polymerizable vinyl group and an acid anhydride in a molecule thereof. Specifically, preferable examples thereof include a maleic acid anhydride.

The ASA resin is a substance made of an acrylate monomer, a styrene monomer, and an acrylonitrile monomer, and that has rubbery properties and thermoplasticity.

Examples of the ABS resin include a resin produced by a graft-polymerization, with an acrylonitrile-styrene-based resin, of an olefin-based rubber (for example, polybutadiene rubber) at approximately 40% by mass or less. Moreover, examples of the AES resin include a resin produced by graft-polymerization, with an acrylonitrile-styrene-based resin, of an ethylene-propylene copolymer rubber (for example, EP rubber) at approximately 40% by mass or less.

### Non-elastomer Thermoplastic Polyamide-based Resin

The non-elastomer polyamide-based resin is a polyamide-based resin having a higher elastic modulus than the thermoplastic polyamide-based elastomer described above.

Examples of the thermoplastic polyamide-based resin may include the polyamide which forms the hard segment of the thermoplastic polyamide-based elastomer described above. Examples of the thermoplastic polyamide-based resin may include a polyamide that is a ring-opening polycondensate of ε-caprolactam (amide 6), a polyamide that is a ring-opening polycondensate of undecane lactam (amide 11), a polyamide that is a ring-opening polycondensate of lauryl lactam (amide 12), a polyamide that is a condensate of a diamine and a dibasic acid (amide 66), and a polyamide having meta-xylene diamine as a structural unit (amide MX).

The amide 6 can be represented by, for example, {CO-(CH₂)₅-NH}ₙ (wherein n represents the number of repeating units).

The amide 11 can be represented by, for example, {CO-(CH₂)₁₀-NH)ₙ (wherein n represents the number of repeating units).

The amide 12 can be represented by, for example, {CO-(CH₂)₁₁-NH}ₙ (wherein n represents the number of repeating units).

The amide 66 can be represented by, for example, {CO(CH₂)₄CONH(CH₂)₆NH}ₙ (wherein n represents the number of repeating units).

The amide MX having meta-xylene diamine as a structural unit can be represented by, for example, the following structural unit (A-1) (wherein, in (A-1), n represents the number of repeating units).

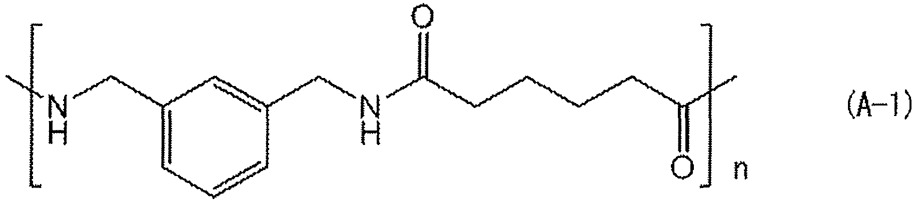

The thermoplastic polyamide-based resin may be a homopolymer formed only from the structural unit described above, or may be a copolymer of the structural unit (A-1) and other monomers. In the case of a copolymer, a content ratio of the structural unit (A-1) in each thermoplastic polyamide-based resin is preferably 60% by mass or more.

The number average molecular weight of the thermoplastic polyamide-based resin is preferably from 300 to 30000. Moreover, from the viewpoint of toughness and flexibility at low temperature, the number average molecular weight of the polymer which forms the soft segment is preferably from 200 to 20000.

A commercial product may be employed as the non-elastomer polyamide-based resin.

As the amide 6, for example, a commercial product of "UBE Nylon" 1022B, 1011FB, or the like manufactured by Ube Industries, Ltd., can be used.

As the amide 12, for example, "UBE Nylon" 3024U or the like manufactured by Ube Industries, Ltd. can be used. As the amide 66, for example "UBE Nylon 2020B" or the like can be used. Moreover, as the amide MX, for example, a commercial product of MX Nylon (S6001, S6021, or S6011) or the like manufactured by Mitsubishi Gas Chemical Company, Inc. can be used.

### Non-elastomer Thermoplastic Polyester-based Resin

The non-elastomer polyester-based resin is a resin having ester bonds in a main chain thereof and having a higher elastic modulus than the thermoplastic polyester-based elastomers described above.

Although the thermoplastic polyester-based resin is not particularly limited, it is preferably the same type of resin as the thermoplastic polyester-based resin included in the hard segment in the thermoplastic polyester-based elastomer described above. Moreover, the non-elastomer polyester-based resin may be crystalline or amorphous, and examples thereof include an aliphatic-type polyester, and an aromatic polyester. The aliphatic-type polyester may be a saturated aliphatic-type polyester or an unsaturated aliphatic-type polyester.

The aromatic polyester is generally crystalline, and can be formed by, for example, an aromatic dicarboxylic acid or an ester-forming derivative thereof, and an aliphatic diol.

Examples of the aromatic polyester include polyethylene terephthalate, polybutylene terephthalate, polystyrene terephthalate, polyethylene naphthalate, and polybutylene naphthalate, and polybutylene terephthalate is preferable.

One example of the aromatic polyester may be, for example, polybutylene terephthalate derived from terephthalic acid and/or dimethylterephthalate, and 1,4-butanediol; and moreover, it may be, for example, a polyester derived from: a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or ester-forming derivatives thereof; and a diol having a molecular weight of 300 or less (for example, an aliphatic diol such as ethylene glycol, trimethylene glycol, pentamethylene glycol, hexamethylene glycol, neopentylglycol, or decamethylene glycol; an alicyclic diol such as 1,4-cyclohexane dimethanol, or tricyclodecane dimethylol; or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl), or a copolymer-polyester in which two or more of these dicarboxylic acid components and these diol components are used in a combination. Copolymerization can also be performed with a polyfunctional carboxylic acid component, a polyfunctional oxyacid component, or a polyfunctional hydroxy component, each of which has three or more functional groups, in a range of 5% by mol or less.

As the non-elastomer thermoplastic polyester-based resin, a commercial product can be used, and examples thereof include "DURANEX" series (for example, 2000, 2002 and the like) manufactured by Polyplastics Co., Ltd., NOVADURAN series (for example, 5010R5, 5010R3-2, and the like) manufactured by Mitsubishi Engineering-Plastics Corporation, and "TORAYCON" series (for example, 1401X06, 1401X31, and the like) manufactured by Toray Industries, Inc.

As the aliphatic polyester, any of dicarboxylic acid/diol condensates or hydroxycarboxylic acid condensates may be used. Examples thereof include polylactic acid, polyhydroxy-3-butylbutyrate, polyhydroxy-3-hexylbutyrate, poly(ε-caprolactone), polyenantholactone, polycaprylolactone, polybutylene adipate, and polyethylene adipate. Polylactic acid is a representative resin as a biodegradable plastic, and a preferable embodiment of polylactic acid is described below.

### Dynamic-Crosslinking type Thermoplastic Elastomer

A dynamic-crosslinking type thermoplastic elastomer may be used as the resin material.

The dynamic-crosslinking type thermoplastic elastomers is a thermoplastic elastomer produced by performing a crosslinking reaction of rubber components under a condition in which rubber is added and mixed to the thermoplastic resin in a molten state and then a crosslinking agent is added thereto and kneaded.

Hereinafter, the dynamic-crosslinking type thermoplastic elastomer is also simply referred to as "TPV" (ThermoPlastic Vulcanizates Elastomer).

Examples of a thermoplastic resin that can be used in a production of the TPV include the thermoplastic resin described above (including the thermoplastic elastomers).

Examples of a rubber component that can be used in production of the TPV include a diene-based rubber and a hydrogenated product thereof (for example, NR, IR, epoxidized natural rubber, SBR, BR (high-cis BR, and low-cis BR), NBR, hydrogenated NBR, and hydrogenated SBR); an olefin-based rubber (for example, an ethylene propylene rubber (EPDM, EPM), a maleic acid-modified ethylene propylene rubber (M-EPM), IIR, a copolymer of isobutylene and an aromatic vinyl or a diene-based monomer, an acrylic rubber (ACM), or an ionomer); a halogen-containing rubber (for example, Br-IIR, Cl-IIR, a brominated product of an isobutylene para-methylstyrene copolymer (Br-IPMS), chloroprene rubber (CR), hydrin rubber (CHR), chlorosulfonated polyethylene (CSM), chlorinated polyethylene (CM), or maleic acid-modified chlorinated polyethylene (M-CM)), a silicone rubber (for example, methyl vinyl silicone rubber, dimethyl silicone rubber, or methyl phenyl vinyl silicone rubber), a sulfur-containing rubber (for example, a polysulfide rubber), a fluorine rubber (for example, a vinylidene fluoride-based rubber, a fluorine-containing vinylether-based rubber, a tetrafluoroethylene-propylene-based rubber, a fluorine-containing silicone-based rubber, and a fluorine-containing phosphazene-based rubber); in particular, a halogen-containing copolymer rubber of an isomonoolefin and a p-alkylstyrene such as, as a modified polyisobutylene-based rubber, a isobutylene-isoprene copolymer rubber in which a halogen group is introduced and/or a isobutylene-paramethylstyrene copolymer rubber in which a halogen group is introduced is effectively used. "Exxpro" manufactured by ExxonMobil is suitably employed as the latter.

Various additives such as a rubber, various fillers (for example, silica, calcium carbonate, and a clay), an antioxidant, oil, a plasticizer, a coloring agent, a weather proofing agent, and a reinforcing material may be contained in the resin material as needed. The content of the additive in the resin material (tire frame) is not particularly limited, and may be used as is appropriate within a range that does not impair the effects of the invention. When components other than the resin, such as the additive, are added to the resin material, the content of the resin component in the resin material is preferably 50% by mass or greater, and is more preferably 90% by mass or greater, with respect to the total amount of resin material. The content of the resin component in the resin material is a remaining part obtained by subtracting the total content of each additive from the total amount of the resin component.

### Physical Characteristics of Resin Material

Hereinafter, preferable physical characteristics of the resin material included in the tire frame are explained.

In the tire frame of the invention, a resin material having a tear strength of 10 N/mm or greater is used. The tire frame therefore also preferably has a tear strength of 10 N/mm or greater, more preferably 11 N/mm or greater, and particularly preferably 12 N/mm or greater. There are no particular limitations to the upper limit of the tear strength of the tire frame; however it is preferably 20 N/mm or less, is more preferably 19 N/mm or less, and is particularly preferably 18 N/mm or less, in view of balance of tensile elastic modulus and loss coefficient (tan δ). The tear strength of the tire frame can be measured using test samples cut from the tire frame. The measurement method for tear strength and the size of the test samples are the same as the case for the resin material described above.

At least the tear strengths of the crown portion and the side portions of the tire frame are preferably each 10 N/mm or greater, more preferably 11 N/mm or greater, and particularly preferably 12 N/mm or greater. In view of balance of tensile elastic modulus and loss coefficient (tan δ), the upper limits thereof are preferably each 20 N/mm or less, are more preferably 19 N/mm or less, and are particularly preferably 18 N/mm or less. In particular, since the tear strength of the side portions of the tire frame exerts a large influence on shape maintaining ability and puncture resistance, when at least the tear strength of the side portions is set within the range described above, an improvement in puncture resistance is effectively exhibited while securing the shape maintaining ability which is an advantageous effect of the invention, and thus is preferable. Accordingly, the tear strength of at least the side portions is preferably set in the above range. The tear strength of the side portions of the tire frame refers to the tear strength obtained from a test sample containing a site on the tire side section at which a width of the tire frame in the tire width direction is maximal. The tear strength of the tire crown portion refers to the tear strength obtained from a test sample containing a site of the tire frame at a center in the tire width direction. The tear strength of the tire frame may be the same in the crown portion and the side portions, or may be different, as needed. For example, in a case in which the tear strength of the tire frame differs depending on its site on the tire frame, for example, the tear strength of the tire frame differs between the crown portion and the side portions or the like, the tear strength of each site may be adjusted by employing the same type of resin material in the crown portion and the side portions of the tire frame and adjusting the thickness or the like, and the tear strength of each site may be adjusted at each site by employing different types of resin material as the material in the crown portion and the side portions of the tire frame.

In such cases, the thickness of the crown portion of the tire frame may be appropriately selected to adjust the tear strength; however, in consideration of the tire weight and the like, the thickness is preferably from 0.5 mm to 10 mm, more preferably from 1 mm to 5 mm, and particularly preferably from 1 mm to 4 mm. Similarly, the thickness of each of the side portions of the tire frame is more preferably from 0.5 mm to 10 mm, and particularly preferably from 1 mm to 5 mm. Regarding the thickness of the crown portion and the side portions of the tire frame, the average thickness of test samples at the measurement of tear strength can be used as a reference. The thickness of the tire frame may be appropriately measured using a known method and device.

The crown portion and the side portions of the tire frame are described later.

The melting point (or the softening point) of the resin material (tire frame) itself is generally from 100°C to 350°C, and is preferably approximately from 100°C to 250°C, and from the viewpoint of tire manufacturability, is preferably approximately from 120°C °C to 250°C, and more preferably from 120°C to 200°C.

By employing resin material having a melting point of from 120°C to 250°C as described above, for example, in a case in which the tire frame is formed by fusing divided bodies thereof (frame pieces), adhesion strength is sufficient among the tire frame pieces even for a frame fused in a surrounding temperature range of from 120°C to 250°C. Accordingly, the tire of the invention has excellent durability during running, such as puncture resistance, abrasion resistance and the like. The heating temperature is preferably a temperature from 10°C to 150°C higher, and more preferably a temperature from 10°C to 100°C higher, than the melting point (or softening point) of the resin material which forms the tire frame pieces.

Various additives can be added, if necessary, and mixed appropriately by a known method (for example, melt-mixing) to obtain the resin material.

The resin material obtained by melt-mixing may be employed in pellet form, if necessary.

The tensile elastic modulus, as defined by JIS K7113:1995, of the resin material (tire frame) itself, is preferably from 100 MPa to 1000 MPa, is more preferably from 100 MPa to 800 MPa, and is particularly preferably from 100 MPa to 700 MPa. When the tensile elastic modulus of the resin material is from 100 MPa to 700 MPa, efficient rim fitting can be performed while maintaining the shape of the tire frame.

The tensile yield strength, as defined by JIS K7113:1995, of the resin material (tire frame) itself is preferably 5 MPa or greater, is preferably from 5 MPa to 20 MPa, and is more preferably from 5 MPa to 17 MPa. When the tensile yield strength of the resin material is 5 MPa or greater, resistance to deformation due to the loads imparted to the tire such as during running can be achieved.

The tensile yield elongation, as defined by JIS K7113:1995, of the resin material (tire frame) itself, is preferably 10% or greater, is preferably from 10% to 70%, and is more preferably from 15% to 60%. When the tensile yield elongation of the resin material is 10% or greater, a large elastic region and favorable rim fitting properties can be achieved.

The tensile fracture elongation, as defined by JIS K7113:1995, of the resin material (tire frame) itself is preferably 50% or greater, is preferably 100% or greater, is more preferably 150% or greater, and is particularly preferably 200% or greater. When the tensile fracture elongation of the resin material is 50% or greater, rim fitting properties can be favorable, and there can be a less tendency toward breaking due to impact.

The deflection temperature under load (at loading of 0.45 MPa), as defined by ISO75-2 or ASTM D648, of the resin material (tire frame) itself, is preferably 50°C or more, is preferably from 50°C to 150°C, and is more preferably from 50°C to 130°C. When the deflection temperature under load of the resin material is 50°C or more, deformation of the tire frame can be suppressed even in a case in which vulcanization is performed during manufacture of the tire.

### First Embodiment

Hereinafter, a tire according to a first embodiment of the tire of the invention is explained with reference to the drawings.

A tire 10 of the present embodiment is explained. Fig. 1A is a perspective view illustrating a cross-section of a part of the tire according to the first embodiment of the invention. Fig. 1B is a cross-section of a bead portion fitted to a rim. As illustrated in Fig. 1A, the tire 10 of the present embodiment shows a cross-sectional configuration that is almost the same as that of an ordinary conventional pneumatic tire made of rubber.

As illustrated in Fig. 1A, the tire 10 is equipped with a tire case 17 including a pair of bead portions 12 each of which contacts a bead sheet 21 and a rim flange 22 of the rim 20 illustrated in Fig. 1B, side portions 14 each of which extends outward in a radial direction of the tire from the bead portions 12, and a crown portion 16 (outer peripheral portion) which connects the outside end of one side portion 14 in a radial direction of the tire to the outside end of the other side portion 14 in a radial direction of the tire.

The tire case 17 in the present embodiment is configured with, as a resin material, a resin material containing a single thermoplastic polyester-based resin (for example, "HYTREL 4767", manufactured by Du Pont-Toray Co., Ltd.), to be used. In such a case, the tear strength of the resin material is 13.8 N/mm, and the tear strength of both the side portions 14 and the crown portion 16 of the tire case 17 is also 13.8 N/mm (side portion 14 thickness: 3 mm, crown portion 16 thickness: 3 mm).

The tire case 17 in the present embodiment is formed with a single resin material (the thermoplastic polyester-based resin); however, the invention is not limited to such a configuration, and similarly to ordinary conventional pneumatic tires made of rubbers, a thermoplastic resin material having different characteristics may be employed for each of the sites of the tire case 17 (such as the side portions 14, the crown portion 16 and the bead portions 12). The tire case 17 may be reinforced with a reinforcement material by embedding of the reinforcement material (such as fibers, cord, nonwoven fabric, or cloth of a polymer material or metal, and the like) in the tire case 17 (for example, in the bead portions 12, the side portions 14, the crown portion 16, and the like).

The tire case 17 in the present embodiment is a product formed by bonding a pair of tire case half parts (tire frame pieces) 17A formed of a resin material. The tire case half parts 17A are formed such that annular tire case half parts 17A having the same shape, each of which formed by injection-molding or the like, in an integrated manner, one of the bead portions 12, one of the side portions 14, and a half-width of the crown portion 16 are arranged to face each other and bonded at a tire equatorial plane portion. The tire case 17 is not limited to being formed by bonding two members, and may be formed by bonding three or more members.

The tire case half parts 17A formed from the resin material can, for example, be formed by vacuum molding, pressure molding, injection molding, melt casting, or the like. Therefore, it is not necessary to perform vulcanization in contrast to cases in which a tire case is conventionally formed from rubber, whereby a tire manufacturing process can be greatly simplified, and molding time can be reduced.

In the present embodiment, since the tire case half parts 17A are formed in bilateral symmetrical shapes, that is, one of the tire case half parts 17A is formed in the same shape as the other of the tire case half parts 17A, it is advantageous that one type of mold suffices for forming the tire case half parts 17A.

In the present embodiment, as illustrated in Fig. 1B, an annular bead core 18, formed from steel cord, is embedded in each of the bead portions 12, similarly to in ordinary conventional pneumatic tires. However, the invention is not limited to such a configuration, and the bead core 18 may be omitted as long as the rigidity of the bead portions 12 is secured and there are no issues with fitting to the rim 20. Other than steel cord, the bead core 18 may also be formed from, for example, organic fiber cord, organic fiber cord coated with a resin, or a hard resin.

In the present embodiment, an annular sealing layer 24, that is formed from a material having superior sealing properties to the resin material which forms the tire case 17, for example, rubber, is formed at a portion at which the bead portions 12 contacts the rim 20, or at least at a portion at which the rim 20 contacts the rim flanges 22. The sealing layer 24 may also be formed at a portion at which the tire case 17 (the bead portions 12) contacts the bead sheets 21. A softer material than the resin material which forms the tire case 17 can be employed as the material having superior sealing properties to the resin material which forms the tire case 17. As a rubber which can be employed as the sealing layer 24, the same type of rubber is preferably employed as the rubber employed on bead portion external faces of ordinary conventional pneumatic tires made of rubber. The sealing layer 24 of rubber may also be omitted as long as sealing properties with the rim 20 can be secured by the resin material which forms the tire case 17 alone, and other thermoplastic resins (thermoplastic elastomer) having superior sealing properties to the resin material may also be employed. Examples of such other thermoplastic resins include resins such as polyurethane-based resins, polyolefin-based resins, thermoplastic polystyrene-based resins, polyester resins, and blends of these resins and a rubber or elastomer, or the like. A thermoplastic elastomer may also be employed, and examples thereof include a thermoplastic polyester-based elastomer, a thermoplastic polyurethane-based elastomer, a thermoplastic polystyrene-based elastomer, a thermoplastic polyolefin-based elastomer, a combination of such elastomers, and blends with rubber.

As illustrated in Fig. 1A, a reinforcement cord 26 having higher rigidity than the resin material which forms the tire case 17 is wound around the crown portion 16 in a circumferential direction of the tire case 17. The reinforcement cord 26 is wound in a spiral shape in such a state that at least a part thereof is embedded in the crown portion 16 in a cross-sectional view along an axial direction of the tire case 17, to form a reinforcement cord layer 28. The crown 30, formed from a material, for example rubber, having superior abrasion resistance to the resin material which forms the tire case 17, is placed on an outer peripheral side of the reinforcement cord layer 28 in a radial direction of the tire.

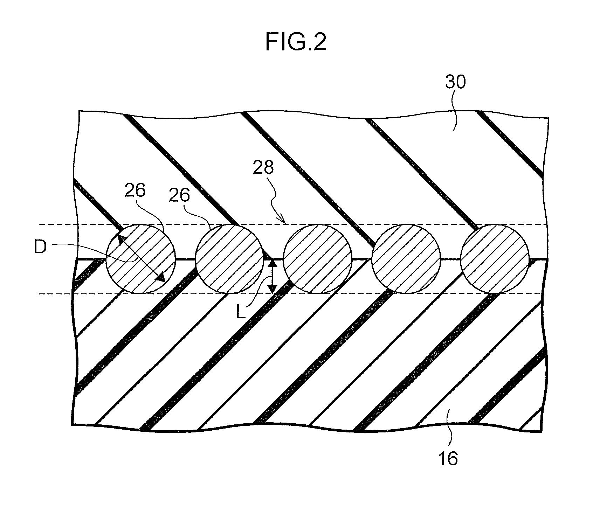

The reinforcement cord layer 28 formed from the reinforcement cord 26 is explained with reference to Fig. 2. Fig. 2 is a cross-sectional view along the tire rotation axis and illustrating a state in which reinforcement cord is embedded in the crown portion of the tire case of the tire of the first embodiment. As illustrated in Fig. 2, the reinforcement cord 26 is wound in a spiral shape in such a state that, in a cross-sectional view along an axial direction of the tire case 17, at least a part is embedded in the crown portion 16, to form, together with a part of the outer peripheral portion of the tire case 17, the reinforcement cord layer 28 as illustrated by the dashed line portion in Fig. 2. The part of the reinforcement cord 26 embedded in the crown portion 16 is in a state of closely-contacting with the resin material which forms the crown portion 16 (the tire case 17). As the reinforcement cord 26, a monofilament (single strand) such as metal fiber, organic fiber or the like, or a multifilament (twisted strands) formed from twisted fibers such as a steel cord formed from twisted steel fiber, or the like, can be employed. In the present embodiment, a steel cord is employed as the reinforcement cord 26.

In Fig. 2, the depth L of embedding indicates a depth of embedding of the reinforcement cord 26 with respect to the tire case 17 (the crown portion 16) to the rotation axis direction of the tire. The depth L of embedding of the reinforcement cord 26 with respect to the crown portion 16 is preferably 1/5 or greater of the diameter D of the reinforcement cord 26 and more preferably more than 1/2. It is most preferable that the whole of the reinforcement cord 26 is embedded in the crown portion 16. When the depth L of embedding of the reinforcement cord 26 is more than 1/2 of the diameter D of the reinforcement cord 26, from a dimensional perspective of the reinforcement cord 26, the reinforcement cord 26 is less likely to come out from the embedded portion. When the whole of the reinforcement cord 26 is embedded in the crown portion 16, a surface (outer peripheral face) is flat, whereby incorporation of air to a peripheral part of the reinforcement cord can be suppressed even when a member is placed on the crown portion 16 in which the reinforcement cord 26 is embedded. The reinforcement cord layer 28 corresponds to a belt disposed on an outer peripheral face of a carcass of a conventional pneumatic tire made of rubber.

As described above, the crown 30 is placed on an outer peripheral side of the reinforcement cord layer 28 in a radial direction of the tire. Rubber employed in the crown 30 is preferably a similar type of rubber to the rubber employed in a conventional pneumatic tire made of rubber. In place of the crown 30, a crown formed from another type of resin material having superior abrasion resistance to the resin material which forms the tire case 17 may be employed. A crown pattern formed from a plurality of grooves is formed on a face of the crown 30 which contacts the road, similarly to a conventional pneumatic tire made of rubber.

Hereinafter, a manufacturing method of a tire according to the present embodiment is explained.

### Tire Case Molding Process

First, tire case half parts supplied by a thin metal support ring are arranged to face each other. Then a bonding mold which is omitted from the drawings is placed so as to contact an outer peripheral face of the contact part of the tire case half part. The bonding mold is configured to press the circumference of the bonding part (the contact part) of the tire case half part 17A with a specific pressure. Subsequently, the circumference of the contact part of the tire case half part is pressed at the melting point (or softening point) or higher of the resin material which forms the tire case. The bonding part of the tire case half parts is heated and pressed by the bonding mold, whereby the bonding part is melted, the tire case half parts are fused together, and these members form into the tire case 17 in an integrated manner. Although in the present embodiment the bonding part of the tire case half parts is heated using the bonding mold, the invention is not limited thereto, and, for example, the bonding parts may be heated by a radio frequency heater separately provided, or the like, or may be softened or melted in advance by using hot air, irradiation with infrared radiation, or the like, and then pressed by the bonding mold to bond the tire case half parts together.

### Reinforcement Cord Member Winding Process

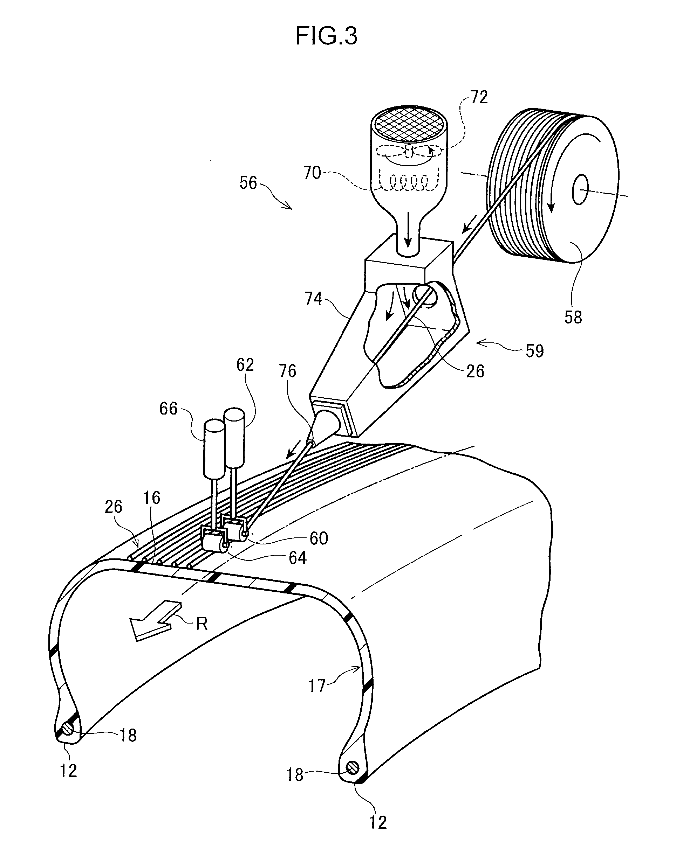

Next, a reinforcement cord winding process is explained, with reference to Fig. 3. Fig. 3 is an explanatory diagram to explain an operation of embedding of the reinforcement cord in the crown portion of a tire case using a cord heating device and rollers. In Fig. 3, a cord supply device 56 is equipped with: a reel 58 which is wound with the reinforcement cord 26; a cord heating device 59 which is disposed in a downstream side of the reel 58 in the cord conveyance direction; a first roller 60 which is disposed in a downstream side of the reinforcement cord 26 in the conveyance direction; a first cylinder device 62 which moves the first roller 60 in a direction towards or away from, the outer peripheral face of the tire; a second roller 64 which is disposed in a downstream side of the reinforcement cord 26 in a conveyance direction of the first roller 60; and a second cylinder device 66 which moves the second roller 64 in a direction towards or away from, the outer peripheral face of the tire. The second roller 64 can be employed as a cooling roller made of metal. In the present embodiment, the surface of the first roller 60 or the second roller 64 is coated with a fluororesin (TEFLON (registered trademark) in the present embodiment) to suppress adhering of the melted or softened resin material. In the present embodiment, the cord supply device 56 is configured to have the two rollers, the first roller 60 and the second roller 64; however, the invention is not limited to such a configuration, and may be configured to have one of the rollers alone (that is, one roller).

The cord heating device 59 is equipped with a heater 70 and a fan 72, for generating hot air. The cord heating device 59 is also equipped with a heating box 74 in which hot air is supplied to the inside thereof and the reinforcement cord 26 passes through an interior space thereof; and a discharge outlet 76 through which the heated reinforcement cord 26 is discharged.

In the present process, first, the temperature of the heater 70 on in the cord heating device 59 is raised, and the surrounding air heated by the heater 70 is delivered into the heating box 74 by means of an airflow generated by rotation of the fan 72. The reinforcement cord 26 unwound from the reel 58 is then delivered into the heating box 74, of which the internal space has been heated by the hot airflow, and heated (for example, the temperature of the reinforcement cord 26 is heated to approximately 100°C to 200°C). The heated reinforcement cord 26 passes through the discharge outlet 76, and is wound helically at a certain tension on the outer peripheral face of the crown portion 16 of the tire case 17 which rotates in the arrow R direction in Fig. 3. When the heated reinforcement cord 26 contacts the outer peripheral face of the crown portion 16, the resin material of the contact part is melted or softened, and at least a part of the heated reinforcement cord 26 is embedded in the outer peripheral face of the crown portion 16. At this time, since the heated reinforcement cord 26 is embedded in the melted or softened resin material, a state in which there are no gaps between the resin material and the reinforcement cord 26, that is, a closely- contacting state is achieved. Accordingly, incorporation of air into the portion where the reinforcement cord 26 is embedded is suppressed. When the reinforcement cord 26 is heated to a temperature higher than the melting point (or softening point) of the resin material which forms the tire case 17, melting or softening of the resin material at the portion which contacts the reinforcement cord 26 is promoted. In this manner, the reinforcement cord 26 is readily embedded in the outer peripheral face of the crown portion 16, and the incorporation of air can be effectively suppressed.

The depth L of embedding of the reinforcement cord 26 can be adjusted using the heating temperature of the reinforcement cord 26, the tension acting on the reinforcement cord 26, the pressure of the first roller 60, and the like. In the present embodiment, the depth L of embedding of the reinforcement cord 26 is set to be 1/5 or greater of the diameter D of the reinforcement cord 26. The depth L of embedding of the reinforcement cord 26 is more preferably more than 1/2 the diameter D of the reinforcement cord 26, and most preferably the whole of the reinforcement cord 26 is embedded.

In this manner, by winding the heated reinforcement cord 26 while being embedded in the outer peripheral face of the crown portion 16, the reinforcement cord layer 28 is formed on the outer peripheral side of the crown portion 16 of the tire case 17.

Subsequently, a vulcanized-belt shaped crown 30 is wound a single turn around the outer peripheral face of the tire case 17, and the crown 30 is adhered to the outer peripheral face of the tire case 17 with an adhesive or the like. As the crown 30, for example, a precure crown can be employed in conventional known recycled tires. The present process is similar to the process for adhering a precure crown to the outer peripheral face of a base tire of a recycled tire.

Then, the seal layers 24 which is formed from a vulcanized rubber are adhered to the bead portions 12 of the tire case 17 with an adhesive or the like, whereby the tire 10 is completed.

### Effects

In the tire 10 of the present embodiment, since the tire case 17 is formed with a resin material including a thermoplastic polyester-based resin having a tear strength in the range of 10 N/mm or greater, excellent shape maintaining ability and puncture resistance can be exhibited. Moreover, the tire 10 has a structure simpler than that of a conventional tire made of rubber, and is hence lighter in weight. Accordingly, the tire 10 of the present embodiment has high abrasion resistance and durability. In particular, since the tire 10 has the tear strength of the side portion 14 in the range of 10 N/mm or greater and has a thickness of 3 mm, the shape maintaining ability can be sufficiently improved while maintaining light weight characteristics.

In the tire 10 of the present embodiment, the puncture resistance, cutting resistance, and the circumferential direction rigidity of the tire 10 is improved since the reinforcement cord 26 which has a higher rigidity than the resin material is wound helically onto the outer peripheral face of the crown portion 16 of the tire case 17 formed from the resin material in a circumferential direction. As the circumferential direction rigidity of the tire 10 is improved, creep of the tire case 17 formed of the resin material is prevented.

Since at least a part of the reinforcement cord 26 is embedded in the outer peripheral face of the crown portion 16 of the tire case 17 which is formed of the resin material to be in close contact with the resin material, in a cross-sectional view along the axial direction of the tire case 17 (the cross-section illustrated in Fig. 1A), incorporation of air during manufacture is suppressed, and moving of the reinforcement cord 26 by the input force or the like during running is suppressed. Accordingly, the occurrence of detachment or the like in the reinforcement cord 26, the tire case 17, or the crown 30 is suppressed, and the durability of the tire 10 is improved.

As such, when the reinforcement cord layer 28 is configured to contain the resin material, the difference in hardness between the tire case 17 and the reinforcement cord layer 28 is reduced, compared to a case in which the reinforcement cord 26 is fixed with cushion rubber, whereby the reinforcement cord 26 can be further closely contact and fixed to the tire case 17. Accordingly, the incorporation of air described above can be effectively prevented, movement of the reinforcement cord member during running can be effectively suppressed.

Moreover, when the reinforcement cord 26 is a steel cord, easy separation and recovery of the reinforcement cord 26 from the resin material by heating when disposing of the tire can be achieved, and thus it is advantageous from the perspective of recycling characteristics of the tire 10. Since the loss coefficient (tan δ) of resin material is lower than that of vulcanized rubber, the tire rolling characteristics can be improved when the reinforcement cord layer 28 contains a large amount of the resin material. Moreover, the resin material has an advantage that the in-plane shear rigidity is larger than that of vulcanized rubber and steering stability and abrasion resistance during tire running are excellent.

As illustrated in Fig. 2, the depth L of embedding of the reinforcement cord 26 is 1/5 or greater of the diameter D, and thus the incorporation of air during manufacture is effectively suppressed, and the movement of the reinforcement cord 26 by input force during running or the like is further suppressed.

Since the crown 30 which contacts the road surface is formed from a rubber material which has greater abrasion resistance than the resin material which forms the tire case 17, the abrasion resistance of the tire 10 is improved.

Moreover, since the annular bead core 18 formed from a metal material is embedded in the bead portion 12, the tire case 17, that is, the tire 10, is firmly retained onto the rim 20, similarly to a conventional pneumatic tire made of rubber,.

Moreover, since the sealing layer 24 which is formed from a rubber material having superior sealing properties to the resin material which forms the tire case 17 is provided at the part that contacts the rim 20 of the bead portion 12, the sealing properties between the tire 10 and the rim 20 are improved. Accordingly, the leakage of air from inside the tire is even further suppressed, compared to a case in which sealing is performed between the rim 20 and the resin material which forms the tire case 17 alone. The rim fitting properties are also improved by providing the sealing layer 24.

The above embodiment has a configuration in which the reinforcement cord 26 is heated and the surface of the tire case 17 at the part with which the heated reinforcement cord 26 is in contact is melted or softened; however, the invention is not limited to such a configuration, and the reinforcement cord 26 may be embedded in the crown portion 16 after the outer peripheral face of the crown portion 16 in which the reinforcement cord 26 is to be embedded is heated using a hot airflow generation device, without heating the reinforcement cord 26.

In the first embodiment, a heat source of the cord heating device 59 is a heater and a fan; however, the invention is not limited to such a configuration, and a configuration of directly heating the reinforcement cord 26 with radiation heat (such as, for example, by infrared radiation) may be employed.

The first embodiment is configured such that the part of the resin material melted or softened in which the reinforcement cord 26 is embedded is cooled forcibly with the metal second roller 64; however, the invention is not limited to such a configuration, and a configuration of directly flowing a cooling airflow onto the part of the resin material that is melted or softened, thereby forcibly -cooling and solidifying the melted or softened part of the resin material.

The first embodiment is configured to heat the reinforcement cord 26; however, for example, a configuration of covering the outer periphery of the reinforcement cord 26 with the same a resin material as that of the tire case 17. In such a case, by heating the reinforcement cord 26 together with the coating resin material when the coated reinforcement cord is wound onto the crown portion 16 of the tire case 17, incorporation of air during embedding in the crown portion 16 can be effectively suppressed.

Helically winding the reinforcement cord 26 is facile in manufacturing; however, other methods such as providing reinforcement cord 26 discontinuously in the width direction may also be considered.

The tire 10 of the first embodiment is so-called a tubeless tire in which the bead portion 12 is fitted to the rim 20 to form an air chamber between the tire 10 and the rim 20; however, the invention is not limited to such a configuration, and the tire may be formed into a complete tube shape.

### Second Embodiment

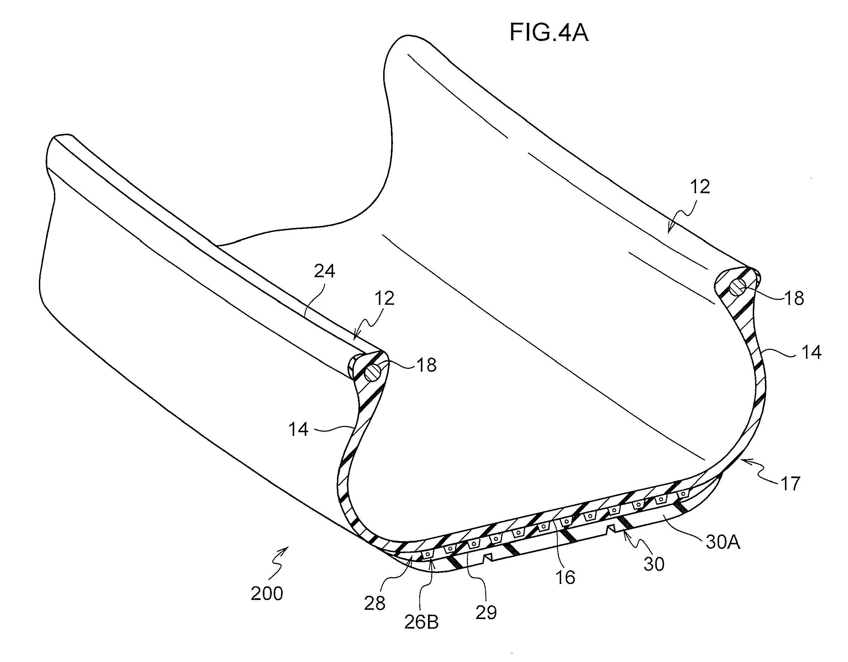

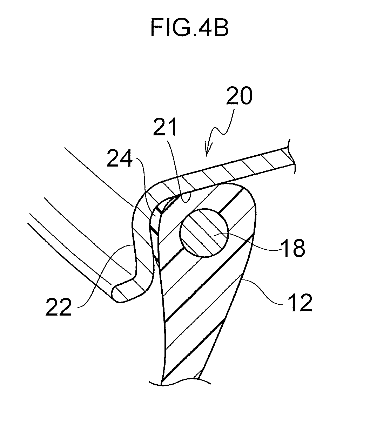

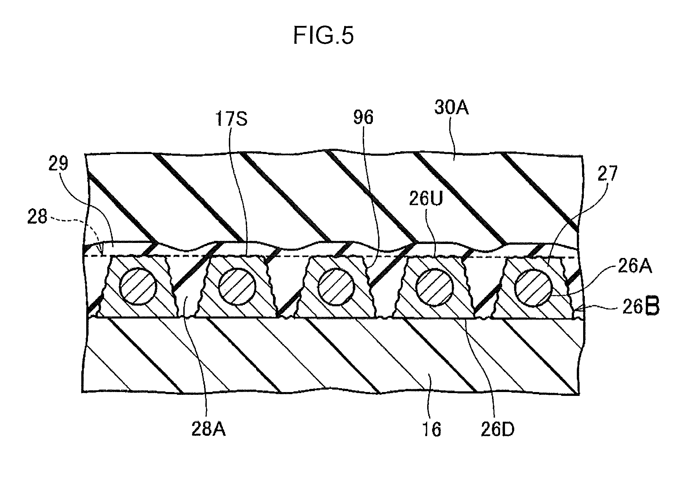

A manufacturing method of a tire and a tire of a second embodiment in the invention are explained with reference to the drawings. The tire of the present embodiment, similarly to the first embodiment described above, shows a cross-sectional configuration that is almost the same as that of an ordinary conventional pneumatic tire made of rubber. Thus, in the following drawings, the same reference numerals are appended to the same configuration to that of the first embodiment. Fig. 4A is a cross-sectional view along the tire width direction of the tire of the second embodiment, and Fig. 4B is an enlarged cross-sectional view along the tire width direction of a bead portion in a state in which the tire of the second embodiment is fitted to a rim. Fig. 5 is a cross-sectional view along the tire width direction illustrating the circumference of a reinforcement layer of a tire according to the second embodiment.

In the tire of the second embodiment, similarly to in the first embodiment described above, a tire case 17 is configured with a resin material containing a thermoplastic polyamide-based resin (for example, UBESTA XPA9048X1, manufactured by Ube Industries, Ltd.). In such a case, the tear strength of the resin material is 14.6 N/mm, and the tear strengths of the side portions 14 and the crown portion 16 of the tire case 17 are both 14.6 N/mm (side portion 14 thickness: 3.0 mm, crown portion 16 thickness: 3.0 mm).

In a tire 200 in the present embodiment, as illustrated in Fig. 4A and Fig. 5, a reinforcement cord layer 28 (illustrated by the dashed line in Fig. 5) in which a coating cord member 26B is wound in the circumferential direction is superposed on the crown portion 16. The reinforcement cord layer 28 forms an outer peripheral portion of the tire case 17 and reinforces the rigidity in the circumferential direction of the crown portion 16. The outer peripheral face of the reinforcement cord layer 28 is included in an outer peripheral face 17S of the tire case 17.

The coating cord member 26B is formed by coating a cord member 26A having higher rigidity than the resin material which forms the tire case 17, with a coating resin material 27 that is different from the resin material which forms the tire case 17. The coating cord member 26B and the crown portion 16 are bonded (for example by welding or by adhering with an adhesive) at the contact part of the covered cord member 26B with the crown portion 16.

The tensile elastic modulus of the coating resin material 27 is preferably set to be within a range of from 0.1 times to 20 times as that of the tensile elastic modulus of the resin material which forms the tire case 17. When the tensile elastic modulus of the coating resin material 27 is 20 times or less of the tensile elastic modulus of the resin material which forming the tire case 17, the crown portion is not excessively hard, and good rim fitting property is facilitated. When the tensile elastic modulus of the coating resin material 27 is 0.1 times or more of the tensile elastic modulus of the resin material which forms the tire case 17, the resin which forms the reinforcement cord layer 28 is not excessively soft, the in-plane shear rigidity of the belt is excellent, and cornering force is improved. In the present embodiment, as the coating resin material 27, the material the same as the resin material which forms the tire frame.

As illustrated in Fig. 5, the coating cord member 26B has a substantially trapezoidal shape in a cross-sectional configuration. In the following, the reference numeral 26U indicates the top face of the coating cord member 26B (the outside face in a radial direction of the tire), and the reference numeral 26D indicates the bottom face (the inside face in a radial direction of the tire). In the present embodiment, the cross-sectional configuration of the coating cord member 26B is configured to have a substantially trapezoidal shape; however, the invention is not limited to such a configuration, and any shape may be employed as long as it is a shape other than a shape in which the width increases from the bottom face 26D side (the inside in the tire radial direction) toward the top face 26U side (the outside in the tire radial direction) in the cross-sectional configuration.

As illustrated in Fig. 5, since the coating cord members 26B are arranged at intervals in the circumferential direction, gaps 28A between adjacent coating cord members 26B are formed. Accordingly, the outer peripheral face of the reinforcement cord layer 28 is corrugated, whereby the outer peripheral face 17S of the tire case 17 in which the reinforcement cord layer 28 forms the outer peripheral portion is also corrugated.

Fine roughened corrugations are uniformly formed on the outer peripheral face 17S of the tire case 17 (including the corrugations), and a cushion rubber 29 is bonded thereon with a bonding agent therethrough. The inside of the rubber part in the radial direction of the cushion rubber 29 has flowed into the roughened corrugations.

The crown 30 formed from a material having superior abrasion resistance to the resin material which forms the tire case 17, such as rubber, is bonded onto (the outer peripheral face of) the cushion rubber 29.

Regarding the rubber (crown rubber 30A) employed in the crown 30, preferably a similar type of rubber is employed to that employed in conventional pneumatic tires made of rubber. In place of the crown 30, a crown formed from another type of resin material having superior abrasion resistance to the resin material which forms the tire case 17 may be employed. A crown pattern (not illustrated in the drawings) formed from a plurality of grooves is formed on a face of the crown 30 which contacts the road, similarly to a conventional pneumatic tire made of rubber.

Next, a manufacturing method of a tire of the present embodiment is explained.

### Tire Case Molding Process

First, similarly to in the first embodiment described above, the tire case half parts 17A are formed, and then heated and pressed by a bonding mold to form the tire case 17.

### Reinforcement Cord Member Winding Process

A manufacturing device for the tire in the present embodiment is similar to that of the first embodiment described above, the cord supply device 56 illustrated in Fig. 3 of the first embodiment in which the coating cord member 26B which has a substantially trapezoidal shape in a cross-sectional configuration and in which the cord member 26A is coated with the coating resin material 27 (the same resin material as that of the tire case in the present embodiment) winds on the reel 58 is used.

First, the temperature of the heater 70 is raised, and the surrounding air heated by the heater 70 delivered into the heating box 74 by means of an airflow generated by rotation of the fan 72. The coating cord member 26B unwound from the reel 58 is then delivered into the heating box 74, of which the internal space has been heated by the hot airflow, and heated (for example, the temperature of the outer peripheral face of the coating cord member 26B is heated to the melting point (or softening point) or more of the coating resin material 27). The coating resin material 27 is in a melted or softened state by heating the coating cord member 26B.

The coating cord member 26B passes through the discharge outlet 76, and is wound helically at a certain tension on the outer peripheral face of the crown portion 16 of the tire case 17 which rotates in the direction coming out from the paper. At this time, the bottom face 26D of the coating cord member 26B contacts the outer peripheral face of the crown portion 16. Then, the coating resin material 27 which is in the melted or softened state at the contact part spreads out over the outer peripheral face of the crown portion 16, and the coating cord member 26B is welded to the outer peripheral face of the crown portion 16. In this manner, the bonding strength between the crown portion 16 and the coating cord member 26B is enhanced.

### Roughening Treatment Process

Subsequently, using a blasting apparatus, which is not illustrated in the drawings, a blasting abrasive is ejected at high speed to the outer peripheral face 17S of the tire case 17, while rotating the tire case 17. The ejected blasting abrasive impacts the outer peripheral face 17S, and forms finely roughened corrugations 96 having an arithmetic mean roughness Ra of 0.05 mm or more on the outer peripheral face 17S.

When the finely roughened corrugations 96 are formed on the outer peripheral face 17S of the tire case 17 in this manner, the outer peripheral face 17S is hydrophilic, thereby improving the wetting properties of the bonding agent, described below.

### Superposition Process

Next, a bonding agent is applied onto the outer peripheral face 17S of the tire case 17 in which a roughening treatment has been performed.

Examples of the bonding agent include a triazinethiol-based adhesive, a chlorinated rubber-based adhesive, a phenol-based resin adhesive, an isocyanate-based adhesive, a halogenated rubber-based adhesive, and a rubber-based adhesive, and there is no particular limitation; however, the bonding agent preferably reacts at a temperature at which the cushion rubber 29 can be vulcanized (from 90°C to 140°C).

Next, the cushion rubber 29 in an unvulcanized state is wound a single turn around the outer peripheral face 17S coated with the bonding agent, then a bonding agent such as a rubber cement composition is applied onto the cushion rubber 29, and the crown rubber 30A which is in a fully vulcanized or semi-vulcanized state is wound a single turn therearound to give a tire case in a raw state.

### Vulcanization Process

Next, the raw tire case is then housed in a vulcanization can or mold, and then vulcanized. At this time, the non-vulcanized cushion rubber 29 flows into the roughened corrugations 96 formed to the outer peripheral face 17S of the tire case 17 by the roughening treatment. When vulcanization is completed, an anchor effect is exhibited by the cushion rubber 29 that has flowed into the roughened corrugations 96, thereby improving the bonding strength between the tire case 17 and the cushion rubber 29. That is, the bonding strength between the tire case 17 and the crown 30 is improved through the cushion rubber 29.

The sealing layer 24 formed from a soft material which is softer than the resin material is then adhered to the bead portions 12 of the tire case 17 using an adhesive or the like, thereby completing the tire 200.

### Effects

In the tire 200 of the present embodiment, since the tire case 17 is formed from a resin material including a thermoplastic polyamide-based resin having a tear strength in the range of 10 N/mm or greater, excellent shape maintaining ability and puncture resistance can be exhibited. Moreover, the tire 200 has a structure simpler than that of a conventional tire made of rubber, and is hence lighter in weight. Accordingly, the tire 200 of the present embodiment has high abrasion resistance and durability. In particular, since the tire 200 has the tear strength of the side portion 14 in the range of 10 N/mm or greater and has a thickness of 3 mm, thereby sufficiently improving the shape maintaining ability and the puncture resistance while retaining lightweight characteristics.

In the manufacturing method of the tire of the present embodiment, since the outer peripheral face 17S of the tire case 17 is subjected to roughening treatment at integrating the tire case 17 with the cushion rubber 29 and the crown rubber 30A, thereby improving the bondability (adhesiveness) due to the anchor effect. Since the resin material which forms the tire case 17 is dug up by an impact of the blasting abrasive, the wetting properties of the bonding agent are improved. In this manner, the bonding agent is retained in a uniformly applied state on the outer peripheral face 17S of the tire case 17, whereby the bonding strength between the tire case 17 and the cushion rubber 29 can be secured.

In particular, even though corrugations are formed in the outer peripheral face 17S of the tire case 17, roughening treatment is performed on the circumference of concave parts (dented walls and dented bottoms) by impact of a blasting abrasive to the concave parts (the gaps 28A), and the bonding strength between the tire case 17 and the cushion rubber 29 can be secured.

Since the cushion rubber 29 is superposed within the region in which roughening treatment of the outer peripheral face 17S of the tire case 17 is performed, the bonding strength between the tire case 17 and the cushion rubber can be effectively secured.

In the vulcanization process, when the cushion rubber 29 is vulcanized, the cushion rubber 29 flows into the roughened corrugations formed on the outer peripheral face 17S of the tire case 17 by roughening treatment. When the vulcanization is completed, the anchor effect is exhibited by the cushion rubber 29 that has flowed into the roughened corrugations, thereby improving the bonding strength between the tire case 17 and the cushion rubber 29.

The tire 200 manufactured by such a tire manufacturing method secures the bonding strength between the tire case 17 and the cushion rubber 29, that is, the bonding strength between the tire case 17 and the crown 30 is secured through the cushion rubber 29. In this manner, detachment between the outer peripheral face 17S of the tire case 17 of the tire 200 and the cushion rubber 29 during running or the like is suppressed.

Since the reinforcement cord layer 28 forms the outer peripheral portion of the tire case 17, the puncture resistance and cut resistance is improved in comparison to a configuration in which the outer peripheral portion is formed from a member other than the reinforcement cord layer 28.

Since the reinforcement cord layer 28 is formed by winding the coating cord member 26B, the rigidity in the circumferential direction of the tire 200 is improved. As the rigidity in the circumferential direction is increased, creep of the tire case 17 (a phenomenon in which plastic deformation of the tire case 17 increases with time under constant stress) is suppressed, and pressure resistance against air pressure from the inside in the tire radial direction is improved.

Moreover, when the reinforcement cord layer 28 is configured to include the coating cord member 26B, a smaller difference in hardness between the tire case 17 and the reinforcement cord layer 28 can be achieved, compared to a case in which the reinforcement cord 26A is simply fixed with the cushion rubber 29, whereby the coating cord member 26B can be further closely adhered and fixed to the tire case 17. Accordingly, incorporation of air as described above can be effectively prevented, and movement of the reinforcement cord member during running can be effectively suppressed.

Moreover, when the reinforcement cord 26A is steel cord, easy separation and recovery of the cord member 26A from the coating cord member 26B can be achieved by heating when disposing of the tire, and thus it is advantageous from the perspective of recycling characteristics of the tire 200. Since the loss coefficient (tan δ) of resin material is lower than that of vulcanized rubber, the tire rolling characteristics can be improved when the reinforcement cord layer 28 contains a large amount of the resin material. Moreover, the resin material has an advantage that the in-plane shear rigidity is larger than that of vulcanized rubber and steering stability and abrasion resistance during tire running are excellent.

In the present embodiment, corrugations are formed on the outer peripheral face 17S of the tire case 17; however, the invention is not limited thereto, and a configuration in which the outer peripheral face 17S is formed to be flat may be employed.

In the tire case 17, the reinforcement cord layer may be formed such that a coating cord member that has been wound on and bonded to the crown portion of a tire case is covered with a coating thermoplastic material. In such a case, a coating layer can be formed by ejecting the coating thermoplastic material in a melted or softened state onto the reinforcement cord layer 28. Alternatively, without employing an extruder, the coating layer may be formed by heating a welding sheet into a melted or softened state, and then attaching the welding sheet to the surface (outer peripheral face) of the reinforcement cord layer 28.

The second embodiment described above is configured to form the tire case 17 by bonding case divided bodies (the tire case half parts 17A); however, the invention is not limited to such a configuration, and the tire case 17 may be integrally formed by using a mold or the like.

The tire 200 of the second embodiment is so-called a tubeless tire in which an air chamber is formed between the tire 200 and the rim 20 by fitting the bead portions 12 to the rim 20, however, the invention is not limited to such a configuration, and the tire 200 may be formed into a complete tube shape, for example.

In the second embodiment, the cushion rubber 29 is disposed between the tire case 17 and the crown 30; however, the invention is not limited thereto, and a configuration in which the cushion rubber 29 is not disposed may be employed.

The second embodiment has a configuration in which the coating cord member 26B is wound helically on the crown portion 16; however, the invention is not limited thereto, and a configuration in which the coating cord member 26B is wound discontinuously in the width direction may be employed.

In the second embodiment, a configuration in which a thermoplastic material is used as the coating resin material 27 which forms the coating cord member 26B and the coating cord member 26B is welded to the outer peripheral face of the crown portion 16 by heating the coating resin material 27 into a melted or softened state is employed. However, the invention is not limited to such a configuration, and a configuration in which the coating cord member 26B is adhered to the outer peripheral face of the crown portion 16 by using an adhesive or the like without heating the coating resin material 27 may be employed.

A configuration in which a thermoset resin is used as the coating resin material 27 which forms the coating cord member 26B, and the coating cord member 26B is adhered to the outer peripheral face of the crown portion 16 by using an adhesive or the like without heating may be employed.

Moreover, a configuration in which a thermoset resin is used as the coating resin material 27 which forms the coating cord member 26B and the tire case 17 is formed of a resin material may be employed. In such a case, the coating cord member 26B may be adhered to the outer peripheral face of the crown portion 16 by an adhesive or the like, and the site of the tire case 17 in which the coating cord member 26B is disposed may be heated into a melted or softened state to weld the coating cord member 26B to the outer peripheral face of the crown portion 16.

Furthermore, a configuration in which a thermoplastic material is uses as the coating resin material 27 which forms the coating cord member 26B and the tire case 17 is formed of a resin material may be employed. In a such case, the coating cord member 26B may be adhered to the outer peripheral face of the crown portion 16 by an adhesive or the like, and the coating resin material 27 may be heated into a melted or softened state while the site of the tire case 17 in which the coating cord member 26B is disposed may be heated into a melted or softened state, thereby welding the coating cord member 26B to the outer peripheral face of the crown portion 16. When both the tire case 17 and the coating cord member 26B are heated into a melted or softened state, both are well-mixed, whereby bonding strength is improved. When the resin material which forms the tire case 17 and the coating resin material 27 which forms the coating cord member 26B are both resin materials, the same type of thermoplastic material is preferable, and the same thermoplastic material is particularly preferable.

After the outer peripheral face 17S of the tire case 17 which has been subjected to roughening treatment may be subjected to corona treatment, plasma treatment or the like to activate the surface of the outer peripheral face 17S, and the hydrophilic properties are increased, an adhesive may be applied.

Moreover, the sequence for manufacturing the tire 200 is not limited to the sequence of the second embodiment, and may be appropriately modified.

Embodiments of the invention have been described by way of exemplary embodiments, however, these embodiments are merely examples, and various modifications can be implemented to the extent of not departing from the gist of the invention. Furthermore, it is needless to say that the scope of rights of the invention is not limited to these embodiments.

### Examples

Hereinafter, more specific explanation regarding the invention is given based on Examples. However the invention is not limited thereto.

### Measurement of Tensile Elastic Modulus

Using an injection molding machine (SE 30D, manufactured by Sumitomo Heavy Industries Co., Ltd.), injection molding was performed at a molding temperature of from 180°C to 260°C, with a mold temperature of from 50°C to 70°C, to obtain samples of 130 mm × 30 mm with a thickness of 2.0 mm.

Each sample was punched out to produce dumbbell shaped test samples (No. 5 test samples) in accordance with JIS K6251:1993. In Comparative Example 1, a test sample was produced in a similar manner to in the other Examples, using rubber.

Then, using Shimadzu Autograph AGS-J (5KN), manufactured by Shimadzu Corporation, the tensile elastic modulus of each of the dumbbell shaped test samples was measured with an elongation speed set at 200 mm/min. The results are shown in the Tables below.

### Measurement of Loss Coefficient (tan δ)

Regarding the loss coefficient (tan δ), the tan δ was measured using an ARESIII, manufactured by TA Instruments, Ltd. under conditions of 30°C, 20 Hz, and shear strain of 1%, using the test samples.

### Evaluation of Tear Strength

Using the resin materials listed in the following Table, test samples were produced and the tear strength was measured, according to JIS K7128 (1998). At this time, the test speed was set to 500 ± 50 mm per minute. Measurements were performed using Shimadzu Autograph AGS-J (5KN), manufactured by Shimadzu Corporation.

### Shape Maintaining Ability

Using the resin materials listed in the following Table, tires were formed in the same manner as in the first embodiment above. A thickness of the side portion was 3 mm and a thickness of the crown portion was 3 mm. Each of the tear strengths of the side portions and the crown portions was the same numerical value as that of the resin material shown in the Tables. Each of the tires was fitted to a rim, filled with air such that an internal pressure was 200 kPa, and the evaluation was performed as to whether or not the shape of the tire was maintained, according to the following criteria.

### Criteria

A: Tire shape was maintained.
C: Unable to be produced as a tire, or tire shape was not maintained.

**Table 1**

| | Example 1 | Example 2 | Example 3 | Example 4 | Example 5 | Example 6 | Example 7 | Example 8 |
|---|---|---|---|---|---|---|---|---|
| Resin Material | TPC 1 | TPC 2 | TPA 1 | TPA 2 | TPA 3 | TPA 4 | TPO | TPU |
| Tear Strength (23°C) (N/mm) | 13.8 | 16.0 | 14.6 | 15.7 | 14.5 | 13.4 | 10.5 | 13.2 |
| Shape Maintaining | A | A | A | A | A | A | A | A |
| Tensile Elastic Modulus (MPa) | 108 | 213 | 183 | 299 | 284 | 191 | 251 | 217 |
| tan δ | 0.04 | 0.078 | 0.068 | 0.108 | 0.081 | 0.054 | 0.141 | 0.157 |

**Table 2**

| | Comparative Example 1 | Comparative Example 2 |
|---|---|---|
| Resin Material | Rubber | TPS |
| Tear Strength (23°C) (N/mm) | 5.2 | 5.5 |
| Shape Maintaining | C | C |
| Tensile Elastic Modulus (MPa) | 1.7 | 87 |
| tan δ | 0.078 | 0.077 |

The components shown in the Tables above are as follows.
• TPC1: thermoplastic polyester-based elastomer
("HYTREL 4767", manufactured by Du Pont-Toray Co., Ltd.)
• TPC2: thermoplastic polyester-based elastomer
("HYTREL 5557", manufactured by Du Pont-Toray Co., Ltd.)
• TPA1: thermoplastic polyamide-based elastomer
("UBESTA XPA9048X1", manufactured by Ube Industries, Ltd.)
• TPA2: thermoplastic polyamide-based elastomer
("UBESTA XPA9055X1", manufactured by Ube Industries, Ltd.)
• TPA3: thermoplastic polyamide-based elastomer
("VESTAMID E55-S4", manufactured by Daicel-Evonik Ltd.)
• TPA4: thermoplastic polyamide-based elastomer
("VESTAMID E55-K1W2", manufactured by Daicel-Evonik Ltd.)
• TPO: thermoplastic polyolefin-based elastomer
("PRIME TPOF3740", manufactured by Prime Polymer Co., Ltd.)
• TPU: thermoplastic polyurethane-based elastomer
("ELASTOLLAN ET858D", manufactured by BASF SE)
• Rubber: The following compositions were kneaded with a Banbury mixer, and press-vulcanized at 145°C for 30 minutes to obtain a sample of 120 mm × 120 mm with a thickness of 2 mm.

**Table 3**

| Composition | Composition Amount |
|---|---|
| Natural Rubber | 30 |
| Butadiene Rubber | 70 |
| FEF Carbon | 50 |
| Stearic Acid | 2 |
| Zinc Oxide | 3 |
| Sulfur | 3 |
| Vulcanization Accelerator (D-G) | 0.5 |
| Vulcanization Accelerator (NS-P) | 0.5 |
| Antioxidant | 1 |

Butadiene rubber: "BR01", manufactured by JSR Corporation
Antioxidant: N-(1,3-dimethylbutyl)-N'-phenyl-p-phenylene diamine ("NOCRAC 6C", manufactured by Ouchi Shinko Chemical Industrial Co., Ltd.)
Vulcanization accelerator D-G: N,N'-diphenylguanidine ("SANCELER D-G", manufactured by Sanshin Chemical Industry Co., Ltd.))
Vulcanization accelerator NS-P: N-t-butyl-2-benzothiazolyl sulfenamide ("NOCCELER NS-P", manufactured by Ouchi Shinko Chemical Industrial Co., Ltd.)
• TPS: thermoplastic polystyrene-based elastomer
("Krayton GA 1535", manufactured by Kraton Inc.)

As understood from the Tables above, when a tear strength was 10 N/mm or greater, shape maintaining ability of the tire was excellent and puncture resistance was excellent. In contrast, the rubber of Comparative Example 1 had a tear strength of 10 N/mm, and was not able to maintain shape against internal pressure. Similarly, in Comparative Example 2, it was understood that, although one type of polystyrene-based elastomer was employed, the shape maintaining ability of the tire was inferior when the tear strength was 10 N/mm, even if the thermoplastic elastomer was used. The tensile elastic modulus was also not sufficient in either of the Comparative Examples.

The disclosure of Japanese Patent Application No. 2012-044592 is incorporated by reference into the present specification.

## Claims

1. A tire comprising a circular tire frame formed from a resin material, wherein the resin material has a tear strength of 10 N/mm or greater.

2. The tire according to claim 1, wherein a tear strength of at least a side portion of the tire frame is 10 N/mm or greater.

3. The tire according to claim 1 or claim 2, wherein the resin material comprises a thermoplastic resin.

4. The tire according to any one of claim 1 to claim 3, wherein the resin material comprises a thermoplastic elastomer.

5. The tire according to any one of claim 1 to claim 4, wherein the resin material includes at least one selected from the group consisting of a thermoplastic polyester-based elastomer, a thermoplastic polyamide-based elastomer, a thermoplastic polyolefin-based elastomer and a thermoplastic polyurethane elastomer.
